# EUROPEAN PATENT APPLICATION

(11) **EP 4 675 890 A1**
(43) Date of publication of application: **07.01.2026**
(21) Application number: 25183867.8
(22) Date of filing: 18.06.2025
(51) Int. Cl.: H02J 13/00

(54) **POWER GRID SYSTEMS AND METHODS WITH ZONAL AUTONOMOUS CONTROL**

(30) Priority: 21.06.2024 US 202418750545
(71) Applicant: GE Vernova Infrastructure Technology LLC, Greenville SC 29615 (US)
(72) Inventor: PAMULAPARTHY, Balakrishna, 500081 Hyderabad (IN); HARTMANN, Wayne Gerard, Greenville, 29615 (US); KANABAR, Mitalkumar, Markham, L6C0M1 (CA)
(74) Representative: Openshaw & Co.

(57) **Abstract**

Provided herein is a power grid system comprising an advanced distribution management system (ADMS) and a distribution zonal measurement device configured to measure zonal distribution operational parameters for an assigned distribution zone of a plurality of distribution zones. Each of the plurality of distribution zones has an associated distribution zonal measurement device and a distribution zonal controller in communication with the distribution zonal measurement device and the ADMS. In some aspects, the distribution zonal controller is configured to receive distribution zonal operational data for the assigned distribution zone from the distribution zonal measurement device and determine a distribution zonal orchestration index based on the distribution zonal operational data. The distribution zonal controller is further configured to communicate the distribution zonal orchestration index to the ADMS and determine an adaptive control action for one or more distribution control devices in the assigned distribution zone based on the distribution zonal orchestration index.

## Description

### TECHNICAL FIELD

These teachings relate generally to power grids and more particularly to the operation and management of power grids.

### BACKGROUND

In recent decades, power grids have increased in complexity. The rise of variable energy sources and bulk power electronic control devices in transmission systems and the rise of controllable loads and variable energy sources in distribution systems has contributed to the increased complexity of power grids. Such factors increase the number of controllable node points and circuit configuration possibilities in a power grid. The increase in complexity of power grids may create challenges with centralized control. For example, the complexity of power grids adds a number of node points to monitor, manage, and control.

### BRIEF DESCRIPTION OF DRAWINGS

Various needs are at least partially met through provision of the power grid systems with zonal autonomous control described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a block diagram of a power grid system, in accordance with various embodiments of these teachings;
FIG. 2 comprises a block diagram of a transmission zonal controller, in accordance with various embodiments of these teachings;
FIG. 3 comprises a flow diagram of a method of operating a transmission zonal controller to generate an adaptive control action or a predictive control action for a transmission zone in a power grid, in accordance with various embodiments of these teachings;
FIG. 4 comprises a schematic diagram of exemplary transmission zones in a power grid, in accordance with various embodiments of these teachings;
FIG. 5 comprises a map of exemplary transmission zones in a power grid, in accordance with various embodiments of these teachings;
FIG. 6 comprises a block diagram of a distribution zonal controller, in accordance with various embodiments of these teachings;
FIG. 7 comprises a flow diagram of a method of operating a distribution zonal controller to generate an adaptive control action or a predictive control action for a distribution zone in a power grid, in accordance with various embodiments of these teachings;
FIG. 8 comprises a flow diagram of a method of operating a distribution zonal controller, in accordance with various embodiments of these teachings;
FIG. 9 comprises a block diagram of a distribution zone in a power grid, in accordance with various embodiments of these teachings;
FIG. 10 comprises a schematic diagram of distribution zone with a sub-zone and a cluster, in accordance with various embodiments of these teachings;
FIG. 11 comprises a flow diagram of a method of operating a transmission zonal controller, in accordance with various embodiments of these teachings;
FIG. 12 comprises a flow diagram of a method of operating a transmission zonal controller, in accordance with various embodiments of these teachings;
FIG. 13 comprises a flow diagram of a method of operating a transmission zonal controller, in accordance with various embodiments of these teachings;
FIG. 14 comprises a flow diagram of a method of operating a transmission zonal controller, in accordance with various embodiments of these teachings;
FIG. 15 comprises a block diagram of a federated grid management system for a power grid, in accordance with various embodiments of these teachings;
FIG. 16 comprises a flow diagram of a method of operating a federated grid management system, in accordance with various embodiments of these teachings;
FIGS. 17A, 17B, and 17C comprise flow diagrams of methods of operating a federated grid management system, in accordance with various embodiments of these teachings;
FIG. 18 comprises a flow diagram of a method of operating a power grid system having a plurality of zones, in accordance with various embodiments of these teachings;
FIG. 19 comprises a flow diagram of a method of operating a power grid system having a plurality of zones, in accordance with various embodiments of these teachings;
FIG. 20 comprises an exemplary computer system for the power grid system, in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The power grid systems and methods described herein divide a power grid system into various zones, for example, within a distribution and/or a transmission power grid. In some aspects, the systems and methods leverage zonal autonomous control to manage the power grid as a set of zones in coordination with each other. The power grid systems and methods described herein may also use a federate grid model that provides a federated data fabric so that there is data fidelity and consistent modeling of the grid is common across distribution and transmission systems. The federated grid model may provide overall grid orchestration and form zones of autonomous control based on centrally defined policies. The federated grid model may set policies and push policies to zones for local execution. Zonal autonomous control may be performed by zonal controllers that have data organized, mapped, stored, and/or learned in a standardized manner to help achieve data fidelity. The federated grid model may receive data from various zonal controllers.

Traditional approaches for power grid system control and management have been top-down approaches with central systems that communicate numerous, sometimes thousands, of points across a power grid. The approaches for power grid system control and management provided herein use decentralized control and automation solutions to provide the ability manage growing power grids that have increased complexity.

The approaches provided herein also provide an all-in-one solution for configuring and managing assets, including both primary and secondary assets, in a power grid system whereas traditional approaches have used separate management solutions for primary and secondary assets. Zones are formed and, for each zone, it is determined what assets are present (e.g. primary assets) and what intelligent electronic devices (IEDs) are connected to the assets (e.g., secondary assets). For each zone data on primary assets and secondary assets is collected and various analytics are computed based on the collected data. From the analytics, primary assets and secondary assets may be ranked in a zone for asset assessment and management.

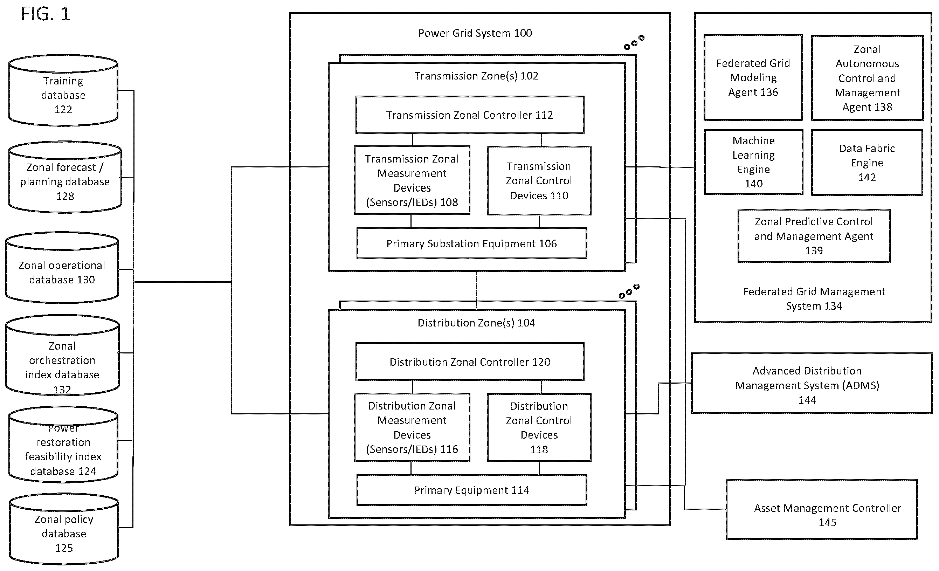

Referring to FIG. 1, a power grid system 100 is shown. In FIG. 1, the power grid system 100 is in communication with a federated grid management system 134, an advanced distribution management system (ADMS) 144, and a plurality of databases.

The power grid system 100 may divided into a number of zones. For example, the transmission power grid may be divided into transmission zones 102 and the distribution zone may be divided into distribution zones 104. In some aspects, the power grid system 100 includes a plurality of transmission zones 102 and a plurality of distribution zones 104.

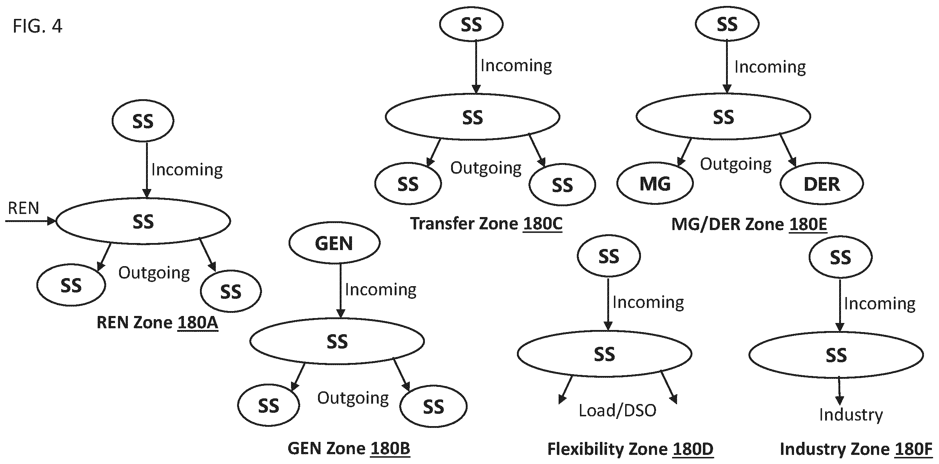

The power grid system 100 may be divided into a plurality of transmission zones 102, for example, based on assets, boundary, and the operational realm of the zone. The operational realm of the zone may refer to the main functionality of the zone, for example, generation, transmission, or distribution. The operational realm for a zone may depend on what assets are present within the zone. As discussed, the operational realm of a zone may factor into the division of the power grid system 100 into a plurality of transmission zones. For example, when a portion of the power grid system 100 has an operational realm is generation, that portion of the power grid system 100 may be designated as a generation zone 180B (see e.g., FIG. 4). In another example, a microgrid in the power grid system 180 may be designated as its own zone, for example, as a microgrid/distributed energy resource (MG/DER) zone.

As used herein, a transmission zone may be a sub-part of transmission power grid network with specific logical structure and boundaries. As shown in FIG. 1, each transmission zone in the plurality of transmission zones 102 may have a transmission zonal controller 112 that is dedicated to an assigned transmission zone. Each transmission zone also includes transmission zonal measurement devices 108 and transmission zonal control devices 110 that provide measurement and control nodes or the transmission zone. The transmission zonal measurement devices 108 and the transmission zonal control devices 110 may be used to identify and control operational and non-operational violations within the transmission zone. Further, the transmission zonal controllers 112 may communicate or coordinate with each other to improve reliability and resiliency of the power grid system.

A transmission zone 102 may comprise primary substation equipment 106, one or more of the transmission zonal measurement devices 108, one or more of the transmission zonal control devices 110, and a transmission zonal controller 112. The transmission zonal measurement devices 108 and the transmission zonal control devices 110 are operably coupled to the primary substation equipment 106. The transmission zonal measurement devices 108 and the transmission zonal control devices 110 are in communication with the transmission zonal controller 112.

The primary substation equipment 106 may comprise any primary equipment at a substation such as, for example, a transformer, switchgear (e.g., circuit breakers), high-voltage direct current (HVDC) controller, flexible alternating current transmission system (FACTS) device, or current and voltage transformer. Primary equipment may be any equipment through which power flows at a substation.

The transmission zonal measurement devices 108 may comprise sensors, intelligent electronic device (IED), smart meters, etc. at a substation that provides monitoring functions for primary substation equipment 106. The transmission zonal measurement devices 108 may be operable to measure, sense, or otherwise determine one or more transmission zonal operational parameters. Transmission zonal operational parameters may include, for example, voltage, frequency, inertia, congestion, reactive power load, or power factor.

The transmission zonal control devices 110 may comprise an intelligent electronic device (IED), gateway, or any secondary equipment at a substation provides control or maintenance functions for primary substation equipment 106. In some examples, the transmission zonal control devices 110 may comprise protection relays. The transmission zonal control devices 110 may be operable to adjust an operational parameter of at least one of a main transformer, a switch, a current transformer, a voltage transformer, a circuit breaker, a voltage regulator, a flexible alternating current transmission system (FACTS) device, a power-electronic controller, a HVDC link controller, a renewable generation source, or a grid forming inverter in a substation.

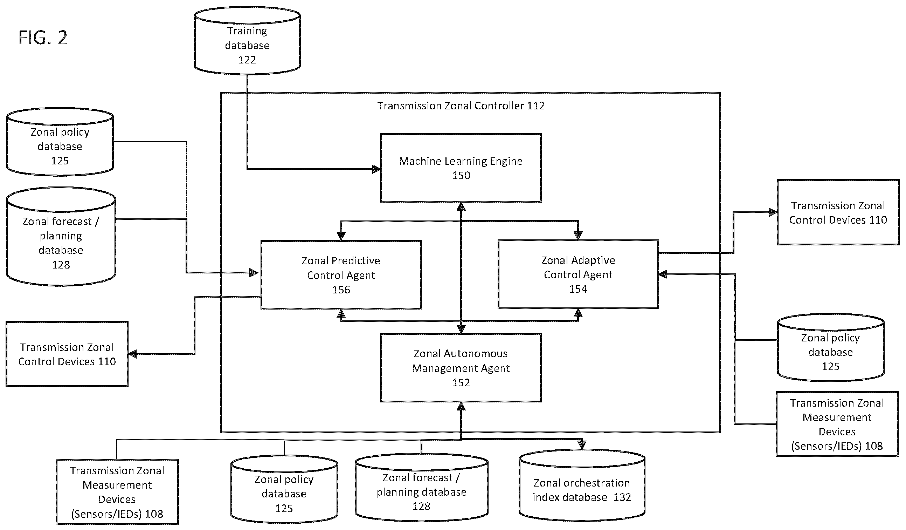

The transmission zonal controller 112 is operable to receive data from the transmission zonal measurement devices 108 and to control the transmission zonal control devices 110. For example, the transmission zonal controller 112 may communicate commands to the transmission zonal control devices 110 to implement a control action. The transmission zonal controller 112 may be in communication with the federated grid management system 134. In some examples, at least one transmission zone 102 of a plurality of transmission zones includes a transmission zonal controller 112. In other examples, each of a plurality of transmission zones includes a transmission zonal controller 112. The transmission zonal controller 112, in accordance with some embodiments, is illustrated in further detail in FIG. 2.

A distribution zone 104 may comprise primary equipment 114, one or more of the distribution zonal measurement devices 116, one or more of the distribution zonal control devices 118, and a distribution zonal controller 120. The distribution zone 104 may a sub-part of a distribution power grid network with specific logical structure and boundaries. The distribution zonal measurement devices 116 and the distribution zonal control devices 118 are operably coupled to the primary equipment 114. The distribution zonal measurement devices 116 and the distribution zonal control devices 118 are in communication with the distribution zonal controller 120. The distribution zone 104 may also include one or more interconnections with another distribution zone.

The primary equipment 114 may comprise any distribution system asset and may be any equipment through which power flows at a substation. Distribution assets may include, for example, substation equipment, a distribution radial feeder line, or an outgoing line. Substation equipment may include, for example, a transformer, switchgear, voltage regulator, capacitive bank, or a power factor control device.

The distribution zonal measurement devices 116 may comprise sensors or intelligent electronic device (IED) at a substation that provides monitoring functions for primary equipment 114. The distribution zonal measurement devices 1114 may be operable to measure, sense, or otherwise determine one or more distribution zonal operational parameters. Distribution zonal operational parameters may include, for example, voltage, power factor, active/reactive power, load per node, battery-based storage system (BESS) capacity, distributed energy resource (DER) generation, renewable energy resource (REN) energy source generation, frequency, electric vehicle (EV) load, micro grid generation, micro grid load, feeder voltage, feeder current, feeder load imbalance, power quality data, etc.

The distribution zonal control devices 118 may comprise an intelligent electronic device (IED) or any secondary equipment at a substation that provides control or maintenance functions for primary equipment 114.

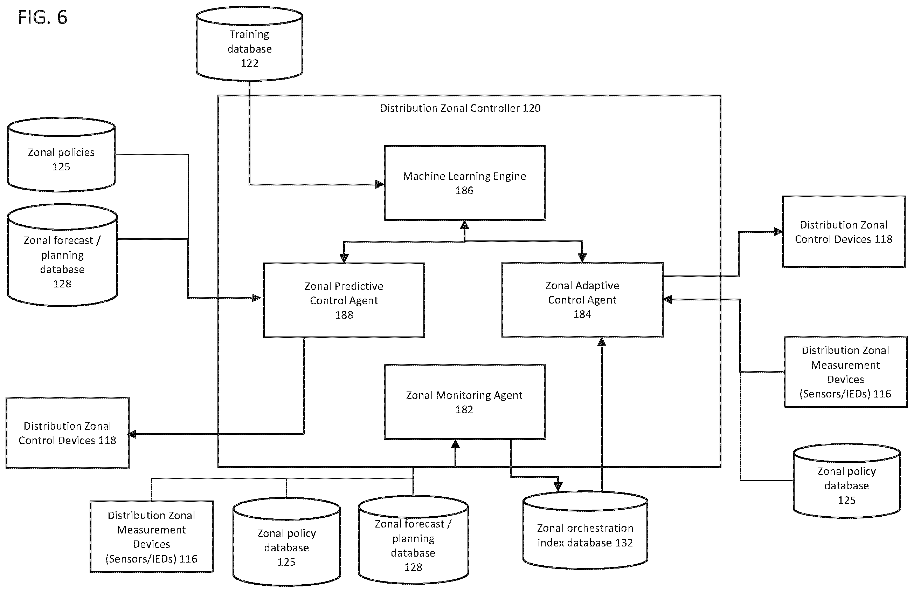

The distribution zonal controller 120 is operable to receive data from the distribution zonal measurement devices 116 and to control the distribution zonal control devices 118. For example, the distribution zonal controller 120 may communicate commands to the distribution zonal control devices 118 to implement a control action. In some examples, at least one distribution zone 104 of a plurality of distribution zones includes a distribution zonal controller 120. In other examples, each of a plurality of distribution zones includes a distribution zonal controller 120. The distribution zonal controller 120, in accordance with some embodiments, is illustrated in further detail in FIG. 6.

The power grid system 100 may be coupled to a plurality of local, remote, and/or cloud databases to retrieve data for performing various functions described herein and/or to store generated data. In some embodiments, data stored in the databases may include training database 122, zonal forecast/planning database 128, zonal operational database 130, zonal orchestration index database 132, power restoration feasibility index database 124, and zonal policy database 125.

The training database 122 may store training data used to train any of the machine learning models described herein. The training database 122 may store historical data that can be used for training purposes to train the machine learning models described herein.

The zonal forecast/planning database 128 may include forecast data or planning data for one or more distribution zones and/or for one or more transmission zones. Forecast data may include, for example, forecasted load data, forecasted weather data, or forecasted distributed energy resource (DER) data. Planning data may include, for example, planned additions, repairs, upgrades, removals, contracts, etc. for the transmission power grid or for the distribution grid in the power grid system 100.

The zonal operational database 130 may store any operation data related to operation of the transmission zones 102 and/or the distribution zones 104 of the power grid system 100. The zonal operational database 130 may be in communication with any component of the power grid system 100, such as the transmission zonal controllers 112, transmission zonal measurement devices 108, transmission zonal control devices 110, distribution zonal controllers 120, distribution zonal measurement devices 116, and/or distribution zonal control devices 118. The zonal operational database 130 may also be in communication with the federated grid management system 134 such that it communicates zonal operational data to one or more components of the federated grid management system 134. The zonal operational database 130 may also be in communication with one or more of the machine learning models described herein such that operation data from the zonal operational database 130 may be leveraged for training purposes.

The zonal orchestration index database 132 may store zonal orchestration indices determined by one or more transmission zonal controllers 112, which is discussed further below with reference to FIG. 2. The zonal orchestration index database 132 may be in communication with one or more transmission zonal controllers 112 or components thereof and, in some aspects, is in communication with the federated grid management system 134.

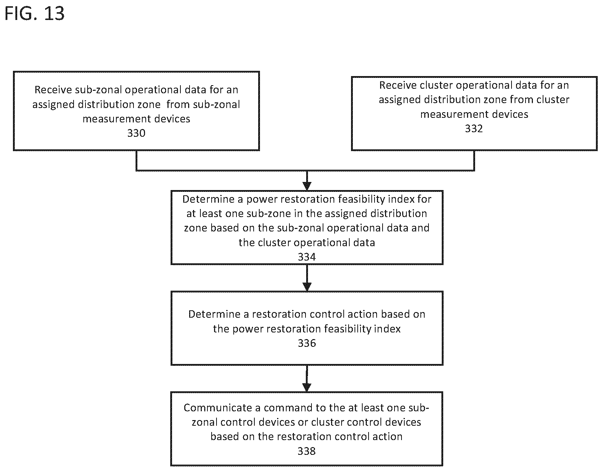

The power restoration feasibility index database 124 may store power restoration feasibility indices determined by one or more of the distribution zonal controllers 120, which is discussed further with reference to FIG. 13. The zonal orchestration index database 132 may be in communication with one or more of the distribution zonal controllers 120 or components thereof and, in some aspects, is in communication with the federated grid management system 134 and/or with the ADMS 144.

The zonal policy database 125 may include at least one of transmission zonal policies for the transmission zone 102, distribution zonal policies for the distribution zone 104, or zonal predictive policies for the transmission zone 102, or zonal predictive policies for the distribution zone 104. The policies may include at least one of adaptive control sources, how to map adaptive control sources to violations, predictive control sources, how to map predictive control sources to violations, information on at least one of how to operate the plurality of distribution zones, how to form sub-zones or clusters based on power grid topology, machine learning objectives for the zones, computing indices related to operation of the zones, or coordinating between a plurality of zones.

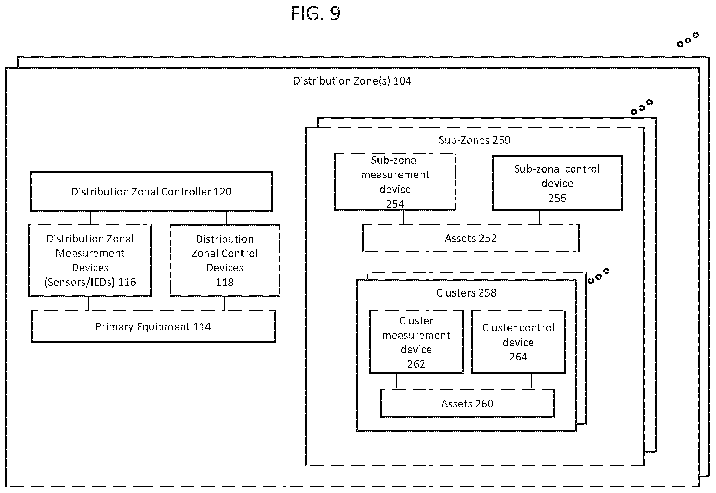

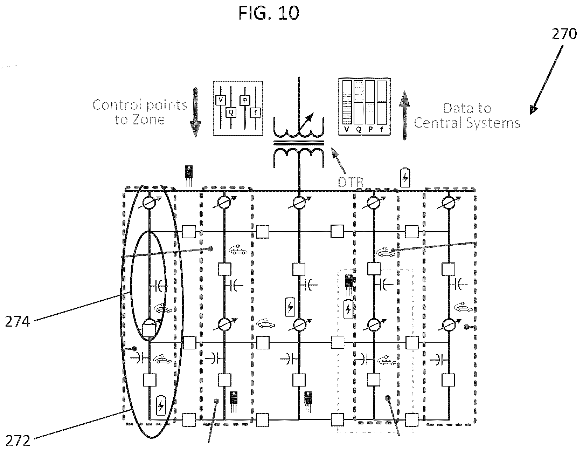

The ADMS 144 may be in communication with one or more of the distribution zonal controllers 120. The ADMS 144 may be configured to dynamically classify a distribution power grid into the plurality of distribution zones. In some approaches, the ADMS 144 may classify or identify a plurality of distribution zones in a distribution power grid based on at least one of a topology of the distribution power grid or a predefined logic. The ADMS 144 may be operable to receive distribution operational data from the distribution zonal controller 120. In some examples, the ADMS 144 may also be configured to dynamically classify the distribution zone 104 into a plurality of sub-zones 250 based on one or more sub-zoning rules. In yet other examples, the ADMS 144 may also be configured to dynamically classify a sub-zone 250 into a plurality of clusters 258 based on one or more clustering rules or policies. The sub-zoning rules or policies and the clustering rules or policies may be defined in the ADMS 144 or in the zonal policy database 125. Sub-zones and clusters are described in detail with reference to FIGS. 9 and 10.

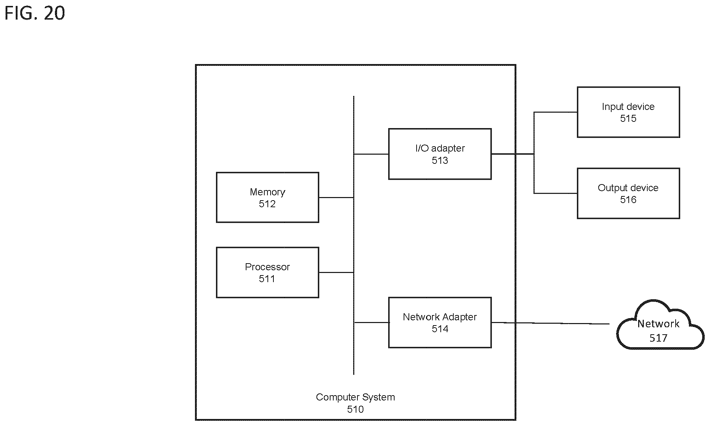

In some embodiments, the power grid system 100, the federated grid management system 134, and the ADMS 144 may be a computer system such as the computer system 510 shown in FIG. 20.

In FIG. 20, the computer system 510 comprises a processor 511, a memory 512, an input/output (I/O) adapter 513, and a network adapter 514 communicating on a bus. In some embodiments, the computer system 510 may include other common components of a processor-based device. The processor 511 is configured to execute computer readable instructions stored on memory 512 to perform one or more functions described herein. The processor 511 is further configured to receive and/or transmit data via the I/O adapter 513 and/or the network adapter 514. In some embodiments, the input device 515 and the output device 516 may comprise user interface devices such as display screens, touch screens, keyboards, microphones, speakers, cameras, motion sensors, etc. In some embodiments, the computer system 510 may communicate with one or more other devices or databases over a network 517 via the network adapter 514. In some embodiments, the network 517 may comprise a local or wide-area network such as the Internet. While the computer system 510 is shown with a single processor 511 and memory 512, in some embodiments, the computer system 510 may be implemented on a cloud-based computer having a plurality of distributed processors and memories.

Further details of the and functions that may be executed by system of FIG. 1 according to some embodiments are described herein and illustrated further with reference to FIGS. 2-19.

### Transmission Operation, Management, and Control

In some embodiments, the systems and methods provided herein may be used to operate, manage, or control a transmission power grid. The increase in controllable node points and circuit configuration possibilities in transmission power grids may make centralized control of the transmission power grid challenging. The systems and methods described herein, however, distribute control across a plurality of transmission zonal controllers, such as the transmission zonal controller 112. For example, the transmission power grid may be divided into a plurality of transmission zones 102 and use a transmission zonal controller 112 associated with an assigned transmission zone of the plurality of transmission zones 102 to control and manage the assigned transmission zone. A transmission power grid control so configured may result in lower latency, greater use of real-time edge information, improved modeling accuracy and management, and improves control. In addition, in traditional transmission power grids, data from measurement devices such as IEDs may not be used effectively. For example, all IED data may not be used in higher level grid decision making. By contrast, in the systems and methods for transmission management and control leverage data from IEDs for decision making and control for a particular transmission zone or for the higher-level grid.

It is also contemplated that the systems and methods described herein for operating, managing, and controlling a transmission power grid may provide real-time control of zonal assets, such as primary substation equipment. The methods and systems may receive feedback on zonal operation to improve transmission zone modeling and predictive actions. Further, operating the transmission power grid as a plurality of transmission zones may reduce the volume of data utilities need to process with attendant communication and may also reduce computational bandwith. In addition, the systems and methods may proactively accommodate rising renewable energy network (REN) and distributed energy resource (DER) integration into the transmission power grid and extreme weather events.

The systems and method herein may facilitate the visualization and management of the transmission power grid as a set of different zone types, which may be formed dynamically based on the power grid network topology. The plurality of transmission zones 102 may be formed intelligently and have associated programable zonal actions for each zone. The transmission zonal controller 112 may operate the assigned transmission zone via adaptive control actions during a normal mode of operation. The federated grid management system 134 may also intervene with the normal mode of operation, for example, during abnormal conditions, to issue intervention controls to the transmission zone 102. In some aspects, the transmission zonal controller 112 may also operate the assigned transmission zone via predictive control actions, which may be control actions for a future time interval, based on zonal forecast data and machine learning.

FIG. 2 illustrates the transmission zonal controller 112, in accordance with some embodiments. The transmission zonal controller 112 is associated with the transmission zone 102. In some aspects, the transmission zonal controller 112 is associated with and configured to operate an assigned transmission zone of a plurality of transmission zones 102. Further, in some aspects, each transmission zone in the plurality of transmission zones 102 may be assigned a controller that is the same as the transmission zonal controller 112.

The transmission zonal controller 112 may include one more of a machine learning engine 150, a zonal autonomous management agent 152, a zonal adaptive control agent 154, and a zonal predictive control agent 156. The machine learning engine 150, the zonal autonomous management agent 152, the zonal adaptive control agent 154, and the zonal predictive control agent 156 may be in communication with each other. It is also contemplated that the operations or functions described with reference to FIG. 2 may be performed by a single agent, engine, or module.

The machine learning engine 150 may include one or more machine learning models. The machine learning engine 150 may be in communication and receive training data from the training database 122.

**In** one example, the machine learning engine 150 may include an autonomous control machine learning model. The autonomous control machine learning model may receive transmission zonal operational data, for example, from the transmission zonal measurement devices 108, and zonal policies as input. The autonomous control machine learning model may receive a zonal orchestration index, for example from the zonal orchestration index database 132 or the zonal autonomous management agent, for the transmission zone 102 as input. The autonomous control machine learning model may determine or identify one or more adaptive control actions, for example, for the transmission zonal control devices **110,** as output. The autonomous machine learning model may be trained on at least one of historical zonal operational parameters, historical optimal control measures, or historical zonal adaptive policies for the transmission zone 102. In some approaches, when the transmission zone is one of a plurality of transmission zones, the autonomous control machine learning model may also be trained on historical zonal orchestration indices and historical operational data from another one of the plurality of transmission zones, for example a transmission zone of the same type as the transmission zone 102. In this manner the autonomous control machine learning model may learn from the operation of zones of similar types.

In another example, the machine learning engine 150 may include a predictive control machine learning model. The predictive control machine learning model may receive zonal forecast and/or planning data, for example, from the zonal forecast/planning database 128, as input. The predictive control machine learning model may also receive zonal policies, for example, from the zonal policy database 125, as input. The predictive control machine learning mode may determine or identify one or more predictive control actions for the transmission zone 102, for example, for the transmission zonal control devices 110, as output.

The zonal autonomous management agent 152 may be configured to determine a transmission zonal orchestration index for the transmission zone 102. The zonal orchestration index may be a measure of performance of the transmission zone 102 relative to a baseline performance or relative to a reference index. The zonal autonomous management agent 152 may determine the zonal orchestration index, for example, based on at least one of zonal operational data from the transmission zonal measurement devices 108, zonal policies, or zonal forecast data. The zonal autonomous management agent 152 may also be in communication with one or more databases, such as the zonal policy database 125, the zonal forecast/planning database, and the zonal orchestration index database 132. For example, the zonal autonomous management agent 152 may receive data from the zonal policy database 125 and the zonal forecast/planning database. In some examples, the zonal autonomous management agent 152 may transmit data to the zonal orchestration index database 132.

The zonal adaptive control agent 154 may determine one or more adaptive control actions for the transmission zone 102, for example, based on at least one of transmission zonal operational data or zonal policies. Zonal policies may define operational parameters, rules, and/or constraints for zone operation. Zonal policies may also define rules for the delineation or division of transmission zones within a power grid. For example, a zonal policy may define rules on how transmission zones are formed and how zonal operation data is used and analyzed within a transmission zone. In another example, a zonal policy may define how a zonal controller should react during abnormal operation, such as when a problem or violation occurs within a zone. Further, a transmission zonal controller 112 for a particular transmission zone may coordinate with other transmission zonal controllers.

Zonal policies may define how a transmission zonal controller 112 takes actions, handles problems, or analyzes data with respect to its interaction with another transmission zonal controllers. For example, if a particular transmission zonal controller 112 is not able to handle a particular situation, another transmission zonal controller in the power grid or a federated grid management system may take over control to handle the situation as defined in the zonal policy. In another example, if a transmission zonal controller 112 violates an operational rule as defined in the zonal policy, the zonal policy may define a penalty for the zonal controller. In some implementations, operational rules may relate to compensation. In one example, an operational rule for a transmission zone may specify that if voltage falls below a predetermined ratio for a particular situation and a penalty for violating the operation rule may be that the zone pays some compensation to customers. In some implementations, the zonal policies may specify operational rules that relate to power generation, transactions, and/or pricing associated with a zone. In one example, a maximum price and a minimum price at which one should buy power from a particular zone may be defined in a zonal policy. In another example, an operational rule may specify that a zone should generate a predetermined power output (e.g., in MW) but the zone does not generate the predetermined power output, the zone may have to pay for generation that did not the predetermined quantity defined in the operational rule.

In some aspects, one or more machine learning models of the machine learning engine 150, such as the autonomous control machine learning model, may be integrated with a part of the zonal adaptive control agent 154. The zonal adaptive control agent 154 may be in communication with and receive data, such as policies, from the zonal policy database 125. The zonal adaptive control agent 154 may be in communication with one or more of the transmission zonal control devices 110. In this manner, zonal adaptive control agent 154 may be configured to communicate or transmit commands to one or more of the transmission zonal control devices 110.

The zonal predictive control agent 156 may determine predictive control actions for the transmission zone 102, for example, based on at least one of the zonal policies and the zonal forecast data. Using the zonal predictive control agent 156, the transmission zonal controller 112 may predict the future behavior of the transmission power grid to determine a predictive control action to achieve an objective or target performance for the transmission power grid. For example, the predictive control actions may include any control actions for the for the transmission zonal control devices 110 during a future time period. In some aspects, one or more machine learning models of the machine learning engine 150, such as the predictive control machine learning model, may be integrated with or a part of the zonal predictive control agent 156. The zonal predictive control agent 156 may be in communication with and receive data, such as policies, from the zonal policy database 125. Further, zonal predictive control agent 156 may be in communication with and receive data, such as forecast data, from the zonal forecast/planning database 128.

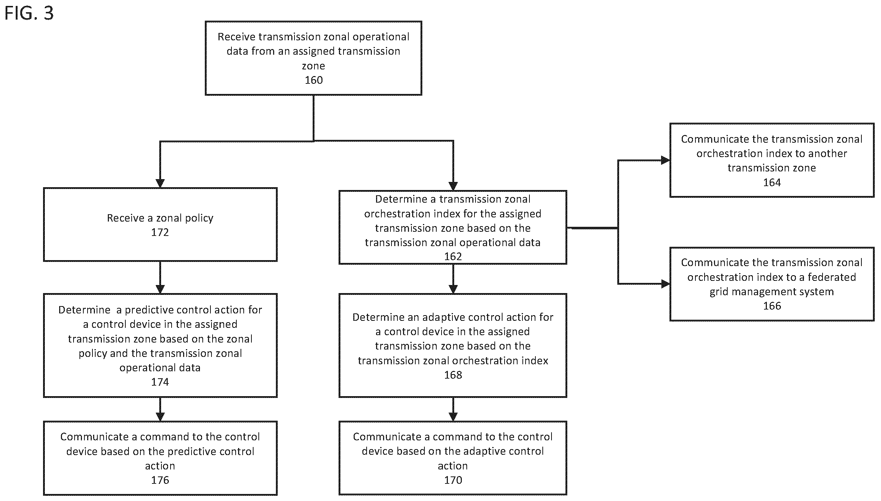

FIG. 3 illustrates a method of operating a transmission zonal controller to generate an adaptive control action or a predictive control action for a transmission zone in a power grid, in accordance with some embodiments. In some examples, the transmission zonal controller is the transmission zonal controller 112 described with reference to FIGS. 1 and 6 and the transmission zone is the transmission zone 102 described with reference to FIG. 1.

At step 160, the transmission zonal controller receives transmission zonal operational data from an assigned transmission zone. For example, the transmission zonal controller 112 may receive transmission zonal operational data from one or more of the transmission zonal measurement devices 108 in the transmission zone 102.

In some approaches, the transmission zonal controller may also receive a zonal adaptive policy for the transmission zone 102. The zonal adaptive policy may include or define standard rules for using zonal control resources to mitigate an operational violation or a non-operational violation in the transmission zone 102. The transmission zonal controller may receive the zonal adaptive policy, for example from the zonal policy database 125 or from the federated grid management system 134.

At step 162, the transmission zonal controller determines a transmission zonal orchestration index for the assigned transmission zone based on the transmission zonal operational data. For example, the transmission zonal controller 112 may determine the transmission zonal orchestration index.

As described above, the transmission zonal orchestration index may be a measure of performance of the assigned transmission zone relative to a baseline performance or a reference index.

In some examples, the zonal orchestration index is indicative of at least one of an operational violation or a non-operational violation in the assigned zone. For example, the transmission zonal controller may identify the operational violation or the non-operational violation by comparing the transmission zonal operational data to a threshold or to reference data that is defined in the zonal adaptive policy. The operational violation may indicate whether one or more of voltage, power, load, reactive power, power factor, congestion stability, frequency, inertia, or grid strength is within a respective threshold limit or a reference range. For example, the operational violation may include one or more of a voltage and/or frequency value outside threshold limits, an active/reactive power outside threshold limits, a transmission line limit exceeding dynamic line ratings, a generator overload, a transformer overload, or a low power factor. The non-operational violation may relate to at least one of a power grid maintenance, hardware, software, or a communication, operator, or cybersecurity related issue. The transmission zonal controller may be further configured to isolate a node or device of the assigned transmission zone upon identification of the non-operational violation.

In some examples, the zonal orchestration index may be a numeric value representing a bit stream encoding the operational violation or the non-operational violation; and wherein bits in the bit stream are sequenced with critical violations positioned on a left-hand side of a bit stream and non-critical violations are positioned on a right-hand side of the bit stream based on severity.

In some approaches, at step 164, the transmission zonal controller may communicate the transmission zonal orchestration index to another transmission zone. For example, the transmission zonal controller 112 may communicate the transmission zonal orchestration index to a transmission zonal controller associated with another transmission zone.

In some approaches, at step 166, the transmission zonal controller may communicate the transmission zonal orchestration index to the federated grid management system. For example, the transmission zonal controller 112 may communicate the transmission zonal orchestration index to the federated grid management system 134.

At step 168, the transmission zonal controller determines an adaptive control action for a control device in the assigned zone based on the transmission zonal orchestration index. For example, the transmission zonal controller 112 may determine an adaptive control action for one or more of the transmission zonal control devices 110 in the transmission zone 102. In some examples, the transmission zonal controller may also determine an adaptive control action for a control device in another one of the plurality of transmission zones, for example, to compromise or compete with the other transmission zone.

In some approaches, the adaptive control action may control at least one of voltage, power factor, load, frequency for an asset, such as a piece of primary substation equipment in the assigned transmission zone or another one of the plurality of transmission zones. Further, the adaptive control action may control at least one of a battery-based energy storage system (BESS), a distributed energy resource (DER), or a renewable energy network (REN) in the assigned zone or another one of the plurality of transmission zones.

In some approaches, the adaptive control action may impact competition or compromise between the assigned transmission zone and another one of the plurality of transmission zones.

In some approaches, the transmission zonal controller may also receive transmission zonal operational data or a transmission zonal orchestration index from another one of the plurality of transmission zones. The transmission zonal controller may then determine the adaptive control action, based at least in part, on the zonal operational data or the zonal orchestration index from the another one of the plurality of transmission zones. For example, transmission zone controller may control competition and/or compromise among the plurality of transmission zones.

At step 170, the transmission zonal controller communicates a command to the control device based on the adaptive control action. For example, the transmission zonal controller 112 may communicate a command to one or more of the transmission zonal control devices 110 in the transmission zone 102. In some examples, the transmission zonal controller may also communicate the command to a control device in another one of the plurality of transmission zones. The command may be configured to cause the control devices to perform the adaptive control action in real time. In some examples, the command is configured to execute a pre-scheduled control based on the transmission zonal orchestration index. The pre-scheduled control may be defined, for example, in the zonal adaptive policy.

In some approaches, the transmission zonal controller may communicate the command to the control device upon identification of an operational violation. As discussed above, the transmission zonal orchestration index may be indicative of an operational violation in the assigned zone. Accordingly, the transmission zonal controller may implement control actions to address the operational violation.

In some approaches, the transmission zonal controller may also communicate an alarm or an electronic message to a user interface associated with the assigned zone. For example, upon identification of a non-operational violation in the assigned zone, instead of or in addition to communicating a command to the control devices, the transmission zonal controller may send an alarm or an electronic message to notify a user of the non-operational violation.

At step 172, the transmission zonal controller may receive a zonal policy. For example, the transmission zonal controller 112 may receive the zonal policy from the federated grid management system 134 or from the zonal policy database 125.

At step 174, the transmission zonal controller may determine a predictive control action for a control device in the assigned zone based on the zonal policy and the transmission zonal operational data. For example, the transmission zonal controller 112 may determine a predictive control action for one or more of the transmission zonal control devices 110 in the transmission zone 102.

In some approaches, the transmission zonal controller may determine the predictive control action using a predictive control machine learning model that is trained on at least one of historical zonal operational parameters, historical optimal control measures, or historical zonal predictive policies and zonal operational forecast data.

At step 176, the transmission zonal controller may communicate the command to the control device based on the predictive control action. For example, the transmission zonal controller 112 may communicate the command to one or more of the transmission zonal control devices 110.

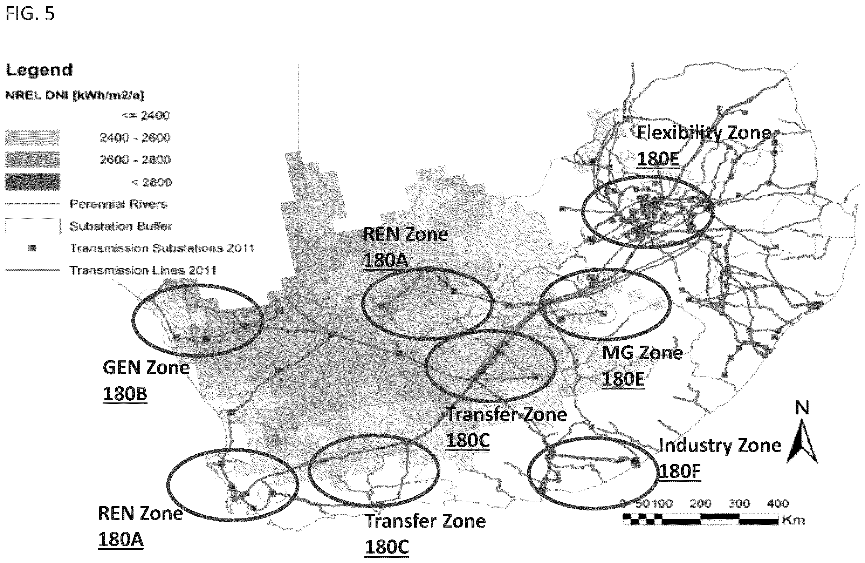

Referring to FIGS. 4 and 5, examples of different types of transmission zones that may be in a power grid system, such as the power grid system 100, are shown. The different types of transmission zones may include at least one of a renewable energy network (REN) zone 180A, generation (GEN) zone 180B, a transfer zone 180C, a flexibility zone 180D, a microgrid (MG) or distributed energy resource (DER) zone 180E, or an industry zone 180F.

The REN zone 180A may include one or more substations with incoming and/or outgoing lines that are integrated into a REN. In the REN zone 180A, a transmission zonal controller may provide one or more of inertia, fast frequency response (FFR), ancillary service (AS), voltage ride through (VRT), or frequency ride through (FRT) support.

The GEN zone 180B may include one or more substations with incoming generation (GEN) and with one or more outgoing lines. In the GEN zone 180B, a transmission zonal controller may provide one or more of inertia, FFR, stability, or black-start support. In one example, the transmission zonal controller may provide black-start support by controlling the restarting of equipment in a GEN zone 180B when there is a complete or partial shutdown of power supply in the zone due to an extreme problem, such as a cyber event. Part of such black-start operations performed by the transmission zonal controller may be to restart the GEN zone 180B in pockets to return the zone to normal operation.

The transfer zone 180C may include one or more substations having one or more incoming lines and one or more outgoing lines.

The flexibility zone 180D may include one or more substations with incoming generation (GEN) and with outgoing lines to one or more distribution systems and/or one or more loads. In the flexibility zone 180D, a transmission zonal controller may provide AS support along with penalty tracking.

The MG/DER zone 180E may include one or more substations with one or more incoming lines and with one or more outgoing lines to a microgrid (MG) or to a distributed energy resource (DER). A microgrid may act as a separate small grid that has its own generation and distribution and can tie into a main power grid but also run on its own. A distributed energy resource may be part of a microgrid and may include a diesel station, solar power, wind power. In the MG/DER zone 180E, a transmission zonal controller may separate the zone and operate the zone as an independent grid when there is a problem in the main grid. The transmission zonal controller may also provide support to another transmission zone in the power grid that is having problems. For example, the transmission zonal controller assigned to the MG/DER zone 180E may manage when a microgrid kicks in to support nearby zones.

The industry zone 180F may include one or more substations with one or more incoming lines from generation (GEN) and with one or more outgoing lines to an industry load. In the industry zone 180F, a transmission zonal controller may provide one or more of ancillary service (AS), demand response (DR), and load management and control (LMC) support. An industry zone 180F may supply power to a main grid and may also be large loads on the main grid. Depending on the scenario, the industry zone 180F may need to limit their load or supply excess power to the main grid. Thus, the transmission zonal controller assigned to the industry zone 180F may dictate when to limit power in the industry zone 180F or when to supply excess power to nearby zones.

In each type of zone, a transmission zonal controller, such as the transmission zonal controller 112, may monitor, manage constraints for, and/and control one or more of voltage, frequency, inertia, congestion, reactive power load, and power factor. A transmission zonal controller, such as the transmission zonal controller 112, may also manage monitor and provide secondary control for one or more of voltage, frequency, inertia, congestion, reactive power load, and power factor in downstream zones. Further, the transmission zonal controller may control coordination with multiple upstream, downstream, and remote zones in the transmission power grid system.

In some approaches, the federated grid management system 134, for example, may delineate or form a plurality of transmission zones in a transmission power grid. For example, the federated grid management system 134 may delineate the plurality of transmission zones based on the power grid architecture, which may be determined based on a single line diagram (SLD)/nanowatt (NW) model of the transmission power grid.

### Distribution Operation, Management, and Control

In some embodiments, the systems and methods provided herein may be used to operate, manage, or control a distribution power grid. The increase in controllable assets and circuit configuration possibilities in distribution power grids may make centralized control of the distribution power grid challenging. The approaches described herein divide the distribution power grid into a plurality of distribution zones with a zone-based network of distribution zonal controllers. In addition, the approaches described herein use the distributed intelligence for zonal automation and control to enable intelligent advanced distribution management system (ADMS) solutions. The combination of ADMS operation with a zone-based network of distribution zonal controllers may help to improve or optimize the operation of the distribution power grid and reduce unpredictability. In addition, use of a zone-based network of distribution zonal controllers may reduce latency, increase the use of real-time information, improve modelling accuracy, and offer improved distribution power grid control.

The systems and methods of operating, managing, and controlling a distribution power grid described herein may be used to provide real-time control of zonal assets. Feedback from the distribution zonal controllers may also improve distribution zone modelling and predictive actions. Use of the zone-based network of distribution zonal controllers may also reduce zone interruptions and individual circuit interruptions within a zone. Further, operating the distribution power grid as a plurality of distribution zones may reduce the volume of data utilities need to process with attendant communication and may also reduce computational bandwith. In addition, the systems and methods may effectively manage increasing renewable energy network (REN) and distributed energy resource (DER) integration into the distribution grid and extreme weather events.

Within a distribution zone, the distribution zonal controller may perform voltage/volt-amps reactive (VAR) optimization (VVO), conservation voltage reduction (CVR), fault location, isolation, and service restoration (FLISR), switching, ramping, power control, power quality control, voltage control, power factor control, and may reduce or minimize supply interruptions. The distribution zonal controllers may also have machine learning capabilities to learn about zonal operation and control actions. The distribution zonal controllers may further integrate control of electronic vehicles (EVs), passive loads, distributed energy resources (DER), micro-grids, battery energy storage systems (BESSs), and load shedding with traditional asset control. Further, zone-based network of distribution zonal controllers may coordinate responses between zones to manage zone restoration and distribution power grid needs. In addition, the zone-based network of distribution zonal controllers may provide the ability to isolate one or more distribution zones for resiliency and to provide resiliency of a neighboring zone.

FIG. 6 illustrates the distribution zonal controller 120, in accordance with some embodiments. The distribution zonal controller 120 is associated with or assigned to the distribution zone 104. In some aspects, the distribution zonal controller 120 is associated with and configured to operate an assigned distribution zone of a plurality of distribution zones 104. Further, in some aspects, each distribution zone in the plurality of distribution zones 104 may be assigned a controller that is the same as the distribution zonal controller 120.

The distribution zonal controller 120 may include one more of a machine learning engine 186, a zonal monitoring agent 182, a zonal adaptive control agent 184, and a zonal predictive control agent 188. The machine learning engine 186, the zonal monitoring agent 182, the zonal adaptive control agent 184, and the zonal predictive control agent 188 may be in communication with each other. It is also contemplated that the operations or functions described with reference to FIG. 3 may be performed by a single agent, engine, or module.

The machine learning engine 186 may include one or more machine learning models. The machine learning engine 186 may be in communication and receive training data from the training database 122.

In one example, the machine learning engine 186 may include baseline machine learning model. The baseline machine learning model may receive at least one of load data, control device settings, distributed energy resource (DER) generation profile data, or intermittency profile data for a distribution zone as input. The baseline machine learning model may then determine or identify one more baseline operational parameters or control device settings for the distribution zone as output. The baseline machine learning model may be trained on at least one of historical load data for the distribution zone, simulated load data for the distribution zone, historical settings for one or more of the distribution zonal control devices, historical distributed energy resource (DER) generation profile data for the distribution zone, simulated distributed energy resource (DER) generation profile data for the distribution zone, simulated intermittency profile data for the distribution zone, or historical intermittency profile data for the distribution zone.

In another example, the machine learning engine 186 may include an adaptive control machine learning model. The adaptive control machine learning model may receive distribution zonal operational data, for example, from the distribution zonal measurement devices 116, and zonal policies as input. The adaptive control machine learning model may also receive a zonal orchestration index, for example, from the zonal orchestration index database 132 or from the zonal monitoring agent, for the distribution zone 104 as input. The adaptive control machine learning model may determine or identify one or more adaptive control actions, for example, for the distribution zonal control devices 118, as output. The adaptive control machine learning model may be trained using at least one of historical zonal orchestration indices, historical distribution zonal operational parameters, simulated distribution zonal operational parameters, historical distribution control measures, simulated distribution control measures, simulated distribution zonal adaptive policies, or historical distribution zonal adaptive policies for the distribution zone 104. The adaptive control machine learning model may also be trained using at least one of historical distribution zonal operational parameters, simulated distribution zonal operational parameters, simulated distribution adaptive control measures, or historical distribution adaptive control measures. In some approaches, when the distribution zone is one of a plurality of distribution zones, the adaptive control machine learning model may also be trained on historical zonal orchestration indices and historical operational data from another one of the plurality of distribution zones, for example a distribution zone of the same type as the distribution zone 104. In this manner the adaptive control machine learning model may learn from the operation of zones of similar types.

In another example, the machine learning engine 186 may include a predictive control machine learning model. The predictive control machine learning model may receive zonal forecast and/or planning data, for example, from the zonal forecast/planning database 128, as input. The predictive control machine learning model may also receive zonal policies, for example, from the zonal policy database 125, as input. The predictive control machine learning model may determine or identify one or more predictive control actions for the distribution zone 104, for example, for the distribution zonal control devices 118, as output. The predictive control machine learning model may be trained using at least one of historical distribution zonal operational parameters, simulated distribution zonal operational parameters, historical distribution control measures, simulated distribution control measures, simulated distribution forecast data, or historical distribution forecast data for the distribution zone 104.

The zonal monitoring agent 182 may be configured to determine a distribution zonal orchestration index for the distribution zone 104. The zonal orchestration index may be a measure of performance of the transmission zone 104 relative to a baseline performance or relative to a reference index. The zonal monitoring agent 182 may determine the zonal orchestration index, for example, based on at least one of distribution zonal operational data from the distribution zonal measurement devices 116, zonal policies, or zonal forecast data. The zonal monitoring agent 182 may also be in communication with one or more databases, such as the zonal policy database 125, the zonal forecast/planning database, and the zonal orchestration index database 132. For example, the zonal monitoring agent 182 may receive data from the zonal policy database 125 and the zonal forecast/planning database. In some examples, the zonal monitoring agent 182 may transmit data to the zonal orchestration index database 132 or to another distribution zonal controller.

In some examples, when the distribution zone 104 includes sub-zones 250 and clusters 258, the zonal monitoring agent 182 may also be in communication with and receive data from the sub-zonal measurement devices 254 and the cluster control devices 264.

In some examples, the zonal monitoring agent 182 may also include a low voltage (LV) module that is configured to receive operational data from a low voltage circuit in the distribution zone 104. The LV module may receive distribution zonal operational data from the distribution zonal measurement devices 116, which may include, for example, advanced metering infrastructure (AMI) or meter data management systems. The distribution zonal operational data received or monitored by the LV module may include at least one of electric vehicle (EV) load, roof-top photovoltaic (PV) generation, power quality, total load, critical load, or load imbalance.

The zonal adaptive control agent 184 may determine one or more adaptive control actions for the distribution zone 104, for example, based on at least one of distribution zonal operational data or zonal policies. Zonal policies may define operational parameters, rules, and/or constraints for zone operation. In some aspects, one or more machine learning models of the machine learning engine 186, such as the adaptive control machine learning model, may be integrated with a part of the zonal adaptive control agent 184. The zonal adaptive control agent 184 may be in communication with and receive data, such as policies, from the zonal policy database 125. The zonal adaptive control agent 154 may be in communication with one or more of the distribution zonal control devices 118. In this manner, zonal adaptive control agent 184 may be configured to communicate or transmit commands to one or more of the distribution zonal control devices 118.

The zonal predictive control agent 188 may determine predictive control actions for the distribution zone 104, for example, based on at least one of the zonal policies and the zonal forecast data. Using the zonal predictive control agent 188, the distribution zonal controller 120 may predict the future behavior of the distribution power grid to determine a predictive control action to achieve an objective or target performance for the transmission power grid. For example, the predictive control actions may include any control action for the for the distribution zonal control devices 118 during a future time period. In some aspects, one or more machine learning models of the machine learning engine 186, such as the predictive control machine learning model, may be integrated with or a part of the zonal predictive control agent 188. The zonal predictive control agent 188 may be in communication with and receive data, such as policies, from the zonal policy database 125. Further, zonal predictive control agent 188 may be in communication with and receive data, such as forecast data, from the zonal forecast/planning database 128.

In some examples, the distribution zonal controller 120 may also include a zonal configuration module that is configured to adjust one or more thresholds, limits, or set points for feeders, assets, and/or devices in the distribution zone 104. The zonal configuration module may adjust the one or more thresholds, limits, or set points based on the distribution zonal operational data. For example, the zonal configuration module may adjust thresholds, operating limits, or set points for one or more of the primary equipment 114, the distribution zonal control devices 118, or the distribution zonal measurement devices 116. In some examples, the zonal configuration module may adjust one or more of a distribution energy resource, a battery energy storage system, or a volt/VAR optimization parameter.

In some examples, the distribution zonal controller 120 may also include a zonal feedback module that is configured to receive distribution zonal operational data after implementation of one or more control actions in the distribution zone 104.

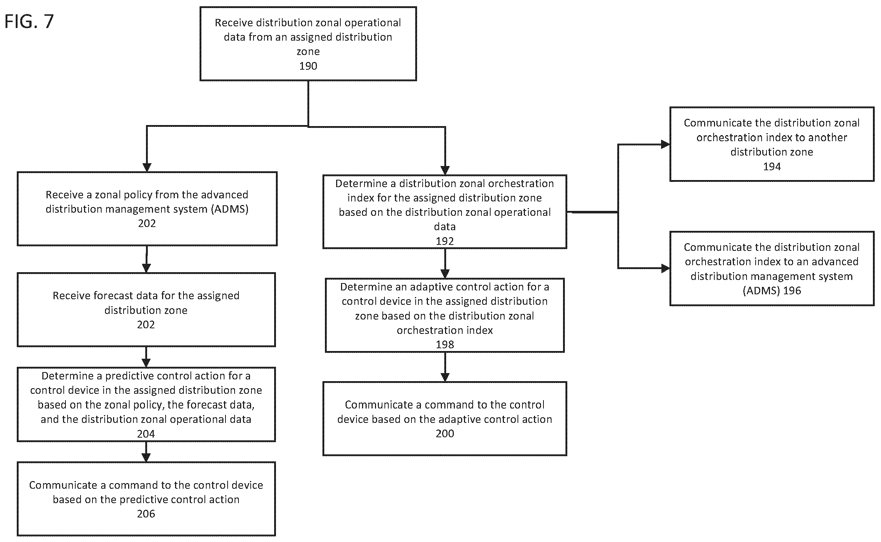

FIG. 7 illustrates a method of operating a distribution zonal controller to generate an adaptive control action or a predictive control action for a distribution zone in a power grid, in accordance with some embodiments. In some examples, the distribution zonal controller is the distribution zonal controller 120 described with reference to FIGS. 1 and 6 and the distribution zone is the distribution zone 104 described with reference to FIG. 1.

At step 190, the distribution zonal controller receives distribution zonal operational data from an assigned distribution zone. For example, the distribution zonal controller 120 may receive distribution zonal operational data from one or more of the distribution zonal measurement devices 116 in the distribution zone 104.

At step 192, the distribution zonal controller determines a distribution zonal orchestration index for the assigned distribution zone based on the distribution zonal operational data. For example, the distribution zonal controller 120 may determine a distribution zonal orchestration index for the distribution zone 104 based on the distribution zonal operational data.

In some examples, the distribution zonal orchestration index may be a measure of operation of the assigned distribution zone with reference to baseline operational data for the assigned distribution zone. The baseline operational data may include, for example, at least one of a baseline load for the assigned distribution zone, a baseline setting for the one or more of the distribution zonal control devices, a baseline distributed energy resource (DER) generation profile for the assigned distribution zone, or a baseline intermittency profile for the assigned distribution zone.

In some examples, the distribution zonal orchestration index may be indicative of at least one of an operational violation or a non-operational violation in the assigned distribution zone. The distribution zonal controller 120 may be configured to identify the operational violation based on the distribution zonal operational data and a distribution zonal policy.

In some examples, the distribution zonal controller may be further configured to determine at least one of a load/generation growth index or a distributed energy resource (DER) intermittency level for the assigned distribution zone. The load/generation growth index may indicate an extent by which load/generation has increased in the assigned distribution zone. The DER intermittency level may indicate a difference between actual DER generation and forecasted DER generation for a particular time interval in the assigned distribution zone. The distribution zonal controller may then determine a setting for one or more of the distribution zonal control devices in the assigned distribution zone based on at least one of the load/generation growth index or the distributed energy resource (DER) intermittency level. In addition, the distribution zonal controller may determine the distribution zonal orchestration index based on at least one of the load/generation growth and the DER intermittency level.

At step 194, the distribution zonal controller communicates the distribution zonal orchestration index to another distribution zone. For example, the distribution zonal controller 120 may communicate the distribution zonal orchestration index to another distribution zone, for example to a distribution zonal controller 120 assigned to another distribution zone.

At step 196, the distribution zonal controller communicates the distribution zonal orchestration index to an advanced distribution management system (ADMS). For example, the distribution zonal controller 120 may communicate the distribution zonal orchestration index to the ADMS 144.

In some approaches, the distribution zonal controller may be configured to communicate an intervention control command to the distribution zonal controller. The distribution zonal orchestration index for the assigned zone and a zonal orchestration index for another one of the plurality of zones. In some examples, the intervention control command may be configured to address at least one of an operational violation or a non-operational violation in the plurality of distribution zones. The intervention control command may compromise between the distribution zones to address violations in the distribution power grid.

At step 198, the distribution zonal controller determines an adaptive control action for a control device in the assigned distribution zone based on the distribution zonal orchestration index. For example, the distribution zonal controller 120 may determine an adaptive control action for a control device in the distribution zone 104.

At step 200, the distribution zonal controller the distribution zonal controller communicates a command to the control device based on the adaptive control action. For example, the distribution zonal controller 120 may communicate a command to one or more of the distribution zonal control devices 118. The command may be configured to cause one or more of the distribution zonal control devices 118 to perform the adaptive control action. In some examples, the command may be configured to control at least one of an electric vehicle load or a passive load or an active load, and wherein the passive load is an industrial, commercial, or residential load that can be switched on or off and cannot be controlled for partial usage.

At step 202, the distribution zonal controller receives forecast data for the assigned distribution zone. For example, the distribution zonal controller 120 may receive forecast data for the distribution zone 104 from the zonal forecast/planning database 128.

In some approaches, the distribution zonal controller may also receive a predictive policy. The distribution zonal controller may receive the predictive policy, for example, from the ADMS 144 or from the zonal policy database 125.

At step 204, the distribution zonal controller determines a predictive control action for a control device in the assigned distribution zone based on the zonal policy, the forecast data, and the distribution zonal operational data. For example, the distribution zonal controller 120 may determine a predictive control action for one or more of the distribution zonal control devices 118 in the assigned distribution zone.

In some approaches, the distribution zonal controller may also determine the predictive control action based on the zonal predictive policy.

At step 206, the distribution zonal controller communicates a command to the control device based on the predictive control action. For example, the distribution zonal controller 120 may communicate a command to one or more of the distribution zonal control devices 118.

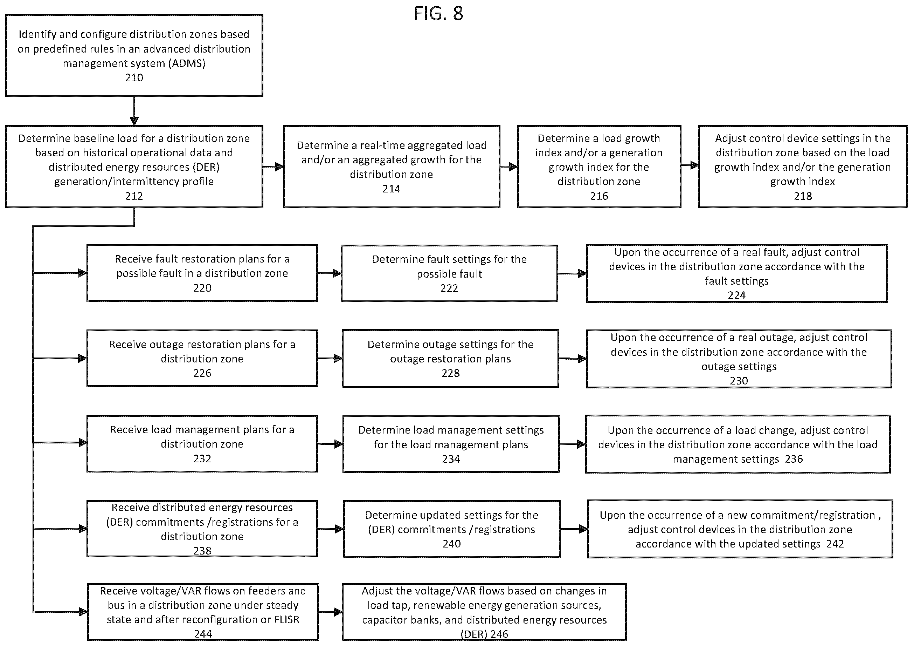

FIG. 8 shows various methods of determining settings for the distribution zonal control devices 118 in the distribution zone 104. In some approaches, the distribution zonal controller may be configured to evaluate plans for the assigned distribution zone and determine corresponding control device settings to implement such plans. The distribution zonal controller 120 may be configured to perform one or more of the steps detailed in FIG. 8.

At step 210, the distribution zonal controller may identify and configure distribution zones based on predefined rules. The predefined rules, for example, may be transmitted to the distribution zonal controller from an advanced distribution management system (ADMS).

At step 212, the distribution zonal controller may determine a baseline load for a distribution zone based on historical operational data for the distribution zone and a baseline distributed energy resources (DER) generation/intermittency profile. The baseline DER generation/intermittency profile may define expected generation for one or more energy resources, such as a solar resource or wind resource. Solar or wind resources may be considered to operate intermittently. The baseline DER generate/intermittency profile may define how such resources are expected to perform over a period of time.

At step 214, the distribution zonal controller may determine at least one of a real-time aggregated load or an aggregated growth for the distribution zone.

At step 216, the distribution zonal controller may determine at least one of a load growth index or a generation growth index for the distribution zone. The load growth index may be a numerical value reflecting the real-time aggregated load in the distribution zone relative to the baseline load. The generation growth index may be a numerical value that measures demand relative to expected generation.

At step 218, the distribution zonal controller may adjust a setting for one or more of the distribution zonal control devices in the distribution zone based on the load growth index and/or the generation growth index.

In another example, the distribution zonal controller is configured to receive a fault restoration plan for the assigned distribution zone. The distribution zonal controller may determine a setting for one or more of the distribution zonal control devices based on the fault restoration plan.

At step 220, the distribution zonal controller receives fault restoration plans for a possible fault in a distribution zone. The fault restoration plan may be any pre-defined procedure or measure for post-fault response that is aimed at detecting, locating, isolating, and/or restoring a fault in a power grid. A fault may be any condition that causes a circuit element to fail to perform in the required manner. Examples of faults may include short circuits, open circuits, failed devices, or overloads.

At step 222, the distribution zonal controller determines fault settings for the possible fault. The fault settings may include settings for one or more of the distribution zonal control devices that may implement the fault restoration plan or restore operation of the power grid.

At step 224, the distribution zonal controller, upon the occurrence of a real or actual fault, adjusts control devices in the distribution zone in accordance with the fault settings. For example, the distribution zonal controller may communicate a command to one or more of the distribution zonal control devices to implement the fault settings.

In another example, the distribution zonal controller is configured to receive an outage restoration plan for the assigned distribution zone. The distribution zonal controller may then determine a setting for one or more of the distribution zonal control devices based on the outage restoration plan.

At step 226, the distribution zonal controller receives outage restoration plans for a distribution zone. The outage restoration plan may be any pre-defined procedure or measure for outage response that is aimed at detecting an outage and/or restoring power in a power grid.

At step 228, the distribution zonal controller determines outage settings for the outage restoration plans. The outage settings may include settings for one or more of the distribution zonal control devices that may implement the outage restoration plan or restore power in the power grid.

At step 230, the distribution zonal controller, upon the occurrence of a real outage, adjusts control devices in the distribution zone accordance with the outage settings. For example, the distribution zonal controller may communicate a command to one or more of the distribution zonal control devices to implement the outage settings.

In another example, the distribution zonal controller is configured to receive a load management plan for the assigned distribution zone. The distribution zonal controller may then determine a setting for one or more of the distribution zonal control devices based on the load management plan.

At step 232, the distribution zonal controller receives load management plans for a distribution zone. The load management plan may be any pre-defined procedure or measure for a change in load in a power grid that is aimed at detecting a change in load and/or operating power grid equipment in response to the change in load.

At step 234, the distribution zonal controller determines load management settings for the load management plans. The load management device settings may include settings for one or more of the distribution zonal control devices that may implement the outage restoration plan or restore power in the power grid.

At step 236, the distribution zonal controller, upon the occurrence of a load change, adjusts control devices in the distribution zone in accordance with the load management settings. For example, the distribution zonal controller may communicate a command to one or more of the distribution zonal control devices to implement the load management settings.

In another example, the distribution zonal controller is configured to receive a new distributed energy resource (DER) commitment or a registration for the assigned distribution zone. The distribution zonal controller may then determine a setting for one or more of the distribution zonal control devices based on the new distributed energy resource (DER) commitment or registration.

At step 238, the distribution zonal controller receives distributed energy resources (DER) commitments or registrations for a distribution zone. Distributed energy resource (DER) commitments may include electricity generation and storage devices that are or will be connected to the power grid. DER commitments or registrations may include a variety of energy types such as solar, wind, and battery storage, etc.

At step 240, the distribution zonal controller determines updated settings to handle the distributed energy resource (DER) commitments or registrations. The updated settings may include settings for one or more of the distribution zonal control devices that are designed to manage or otherwise operate the power grid in response to the distributed energy resource (DER) commitments or registrations.

At step 242, the distribution zonal controller, upon the occurrence of a new commitment or registration, adjusts control devices in the distribution zone accordance with the updated settings. For example, the distribution zonal controller may communicate a command to one or more of the distribution zonal control devices to implement the updated settings.

In yet another example, the distribution zonal controller is configured to receive a voltage/VAR flow on a feeder and bus under steady state operation. The distribution zonal controller may then determine a voltage/VAR flow on a feeder and bus after a planned reconfiguration and determine a target voltage/VAR profile based on the voltage/VAR flow on a feeder and bus after the planned reconfiguration.

At step 244, the distribution zonal controller receives voltage/VAR flows on feeders or a bus in a distribution zone under steady state and after reconfiguration or after fault location, isolation, and service restoration (FLISR).

At step 246, the distribution zonal controller adjusts the voltage/VAR flows based on changes in load tap, renewable energy generation sources, capacitor banks, and distributed energy resources (DER) in the distribution zone. The changes in load tap, renewable energy generation sources, capacitor banks, and distributed energy resources (DER) may occur due to reconfiguration of the distribution zone or due to fault location, isolation, and service restoration (FLISR).

### Distribution Sub-Zonal Computations

In some embodiments, the systems and methods provided herein may divide a distribution zone into sub-zones to operate, manage, or control the sub-zone. A distribution zone in a distribution power grid may be divided or classified into sub-zones. For example, sub-zones may represent a radial feeder in the distribution power grid. Sub-zones may be further divided or classified into clusters. In one example, clusters may represent low voltage (LV) networks in the distribution power grid. A distribution zonal controller assigned to a distribution zone may then determine various situational awareness parameters for the distribution zone on a sub-zone or cluster-wise basis. The situational awareness parameters may indicate a level of load flexibility, generation flexibility, or power quality flexibility in the sub-zone or cluster. The situational awareness parameters may then be used to determine an orchestration index for each sub-zone or cluster so that sub-zones or clusters can be ranked. The ranking may indicate, for example, a level of priority for at least one of an adaptive control action, an emergency situation, or planning for a future time interval.

FIG. 9 shows the distribution zone 104, in accordance with some embodiments. In FIG. 9, the distribution zone 104 is divided into a plurality of sub-zones 250. At least one of the plurality of sub-zones 250 may be further divided into a plurality of clusters 258.

The distribution zone 104 may include primary equipment 114, one or more of the distribution zonal measurement devices 116, one or more of the distribution zonal control devices 118, and the distribution zonal controller 120. The components of the distribution zone 104 are described in detail with reference to FIG. 1.

One or more of the plurality of sub-zones 250 may include one or more assets 252, one or more of the sub-zonal measurement devices 254, and one or more of the sub-zonal control devices 256. A sub-zone 250 may be a feeder within the distribution zone 104. For example, if there are four feeders in a distribution system, each feeder may be considered a sub-zone. All devices or assets 252 connected to the feeder may be part of the sub-zone. Breaking a distribution zone into sub-zones may streamline the management of data for the distribution zone.

The one or more assets 252 may include one or more pieces of the primary equipment 114 of the distribution zone 104. That is, the primary equipment 114 may be divided into or assigned to a sub-zone 250 based on the delineation of the sub-zone 250 in the distribution zone 104.

The sub-zonal measurement devices 254 may be configured to measure at least one sub-zonal operational parameter for a sub-zone 250. Sub-zonal operational parameters may include, for example, voltage, power factor, active/reactive power, load per node, battery based storage system (BESS) capacity, distributed energy resource (DER) generation, renewable energy resource (REN) energy source generation, frequency, electric vehicle (EV) load, micro grid generation, micro grid load, feeder voltage, feeder current, feeder load imbalance, power quality data, etc. The sub-zonal measurement devices 254 may include one or more of the distribution zonal measurement devices 116 in the distribution zone 104. That is, the distribution zonal measurement devices 116 may be divided into or assigned to a sub-zone 250 based on the delineation of the sub-zone 250 in the distribution zone 104.

The sub-zonal control devices 256 may be configured to adjust at least one sub-zonal operational parameter for a sub-zone 250. The sub-zonal control devices 256 may include one or more of the distribution zonal control devices 118 in the distribution zone 104. That is, the distribution zonal control devices 118 may be divided into or assigned to a sub-zone 250 based on the delineation of the sub-zone 250 in the distribution zone 104.

One or more of the plurality of clusters 258 may include one or more assets 260, one or more of the cluster measurement devices 262, and one or more of the cluster control devices 264. A cluster 258 may be one or more load points connected to the feeder in the sub-zone 250. For example, a feeder may have multiple load points drawing power from the feeder. One or more load points may be considered a cluster 258, each load point may have devices that provide electrical data related to the cluster 258. Such devices may be the cluster measurement devices 262, which are described further below. In some aspects, each of the plurality of clusters 258 may be a low voltage (LV) network in the distribution power grid system that is connected through one or more distribution transformers.

The one or more assets 260 may include one or more pieces of the primary equipment 114 of the distribution zone 104. That is, the primary equipment 114 may be divided into or assigned to a cluster 258 based on the delineation of the clusters 258 in the distribution zone 104.

The cluster measurement devices 262 may be configured to measure at least one sub-zonal operational parameter for a cluster 258. Cluster operational parameters may include, for example, voltage, power factor, active/reactive power, load per node, battery-based storage system (BESS) capacity, distributed energy resource (DER) generation, renewable energy resource (REN) energy source generation, frequency, electric vehicle (EV) load, micro grid generation, micro grid load, feeder voltage, feeder current, feeder load imbalance, power quality data, etc. The cluster measurement devices 262 may include one or more of the distribution zonal measurement devices 116 in the distribution zone 104. That is, the distribution zonal measurement devices 116 may be divided into or assigned to a cluster 258 based on the delineation of the clusters 258 in the distribution zone 104.

The cluster control devices 264 may be configured to adjust at least one cluster operational parameter for a cluster 258. The cluster control devices 264 may include one or more of the distribution zonal control devices 118 in the distribution zone 104. That is, the distribution zonal control devices 118 may be divided into or assigned to a cluster 258 based on the delineation of the clusters 258 in the distribution zone 104.

FIG. 10 illustrates a distribution zone 270 in a power grid, in accordance with some examples. The distribution zone 270 may be configured in the same manner as the distribution zone 104 that is shown and described with reference to FIGS. 1 and 9. The distribution zone 270 includes a sub-zone 272. The sub-zone 272 further includes a cluster 274. In FIG. 10, the sub-zone 272 is a feeder and the cluster 274 includes low voltage load points connected to the feeder.

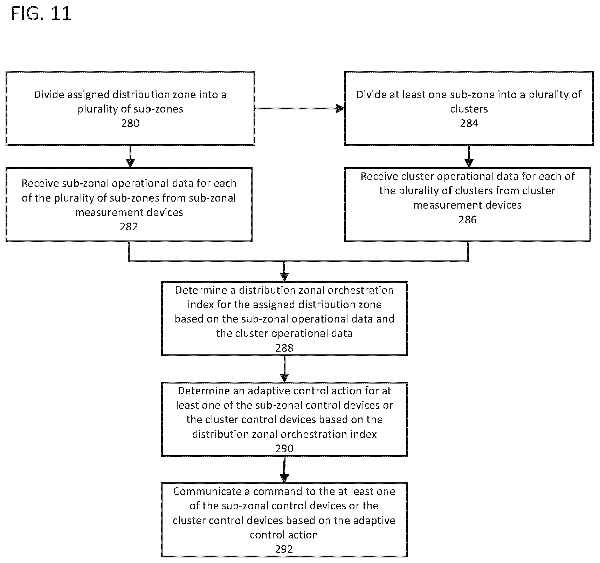

FIG. 11 illustrates a method of operating a distribution zonal controller to divide a distribution zone into sub-zones and clusters and rank the sub-zones and clusters in order prioritize an adaptive control action in the distribution zone, in accordance with some embodiments. In some examples, the distribution zonal controller is the distribution zonal controller 120 described with reference to FIGS. 1 and 6 and the distribution zone is the distribution zone 104 described with reference to FIGS. 1, 6, and 9.

At step 280, the distribution zonal controller may divide an assigned distribution zone into a plurality of sub-zones. For example, the distribution zonal controller may divide the assigned distribution zone into the plurality of sub-zones based on a policy defined in the ADMS 144 or in the zonal policy database 125. The policy may specify, for example, rules or logic for the division of sub-zones based on at least one of assets, network topology, or operating conditions in the assigned distribution zone.

At step 282, the distribution zonal controller may receive sub-zonal operational data for each of the plurality of sub-zones. The distribution zonal controller may receive the sub-zonal operational data from one or more of the sub-zonal measurement devices 254.

In some embodiments, the distribution zonal controller may determine at least one sub-zonal characteristic for the assigned sub-zone based on the sub-zonal operational data. Sub-zonal characteristics may include at least one of critical load, non-critical load, electric vehicle load, vehicle to grid generation, load under demand response (DR) scheme, prosumers generation (PV/DER), voltage/current unbalance, total harmonic distortion, micro-grid enabled generation, or micro-grid enabled load. The distribution zonal controller may further compare the at least one sub-zonal characteristic with baseline operational characteristics. The baseline operational characteristics may reflect operation of the assigned sub-zone under normal operating conditions. Normal operating conditions may be operating conditions under which there are no violations.

In some embodiments, at step 284, the distribution zonal controller may further divide at least one sub-zone into a plurality of clusters. For example, the distribution zonal controller may divide a sub-zone into the plurality of clusters based on a policy defined in the ADMS 144 or in the zonal policy database 125. The policy may specify, for example, rules or logic for the division of clusters based on at least one of assets, network topology, or operating conditions in the sub-zone.

In some approaches, the assigned distribution zone may include a plurality of feeders. Clustering rules may instruct the advanced distribution management system (ADMS) to divide each feeder into a sub-zone and to divide each load connection point via a distribution transformer in the sub-zones into a cluster.

In some embodiments, at step 286, the distribution zonal controller may receive cluster operational data for each of the plurality of clusters. For example, the distribution zonal controller may receive the cluster operational data from the cluster measurement devices 262.

In some embodiments, the distribution zonal controller may determine at least one cluster characteristic based on the cluster operational data for the assigned cluster. Cluster characteristics may include one or more of critical load, non-critical load, electric vehicle load, vehicle to grid generation, load under demand response (DR) scheme, prosumers generation (PV/DER), voltage/current unbalance, total harmonic distortion, micro-grid enabled generation, or micro-grid enabled load. The distribution zonal controller may further compare the at least one cluster characteristic with baseline operational characteristics, the baseline operational characteristics reflecting operation of the assigned cluster under normal operating conditions. The distribution zonal controller may further determine a load situational awareness parameter based on the at least one cluster characteristic, for the load situational awareness parameter indicative of load characteristics in a respective cluster.

At step 288, the distribution zonal controller may also determine a distribution zonal orchestration index for the assigned distribution zone based on the sub-zonal operational data and the cluster operational data.

In some approaches, the distribution zonal orchestration index may be determined based on at least one of a load flexibility index, a generation flexibility index, or a power quality index.

The distribution zonal controller may determine the load flexibility index based on a load situational awareness parameter. The load flexibility index may be a value representing a level at which load is able be adjusted. To determine the load flexibility index, the distribution zonal control may determine a load situational awareness parameter for each of the plurality of clusters. The distribution zonal controller may determine the load situational awareness parameter based on the at least one cluster characteristic. The load situational awareness parameter may be indicative of load characteristics in a respective cluster. In some examples, the load situational awareness parameter includes at least one of a load available for curtailment, a load available for demand response execution, an electric vehicle load, and an MG enabled load, a level of flexibility of load dispatch, a percentage of critical load that is serviceable, a level of non-critical load available for curtailment, or a level of load registered under DR scheme.

The distribution zonal controller may determine the generation flexibility index based on a generation situational awareness parameter. The generation flexibility index may be a value representing a level at which generation is able be adjusted in a respective cluster. The distribution zonal controller may determine the generation situational awareness parameter based on the at least one cluster characteristic. The generation situational awareness parameter may be indicative of generation characteristics in a respective cluster. In some examples, the generation situational awareness parameter may include at least one of incoming power generation, vehicle to grid generation, micro-grid enabled generation, PV enabled generation, distributed energy resource enabled generation, a level of flexibility of generation dispatch, a level of DER generation available, a level of micro-grid generation available for grid supply, or a level of ancillary services available.

The distribution zonal controller may determine the power quality index based on a power quality situational awareness parameter, for each of the plurality of clusters. The power quality flexibility index is a value representing a level at which load is able be adjusted. The distribution zonal controller may determine the power quality situational awareness parameter based on the at least one cluster characteristic. The power quality situational awareness parameter may be indicative of power quality characteristics in a respective cluster. In some examples, the power quality situational awareness parameter may include at least one of voltage/current imbalance, total harmonics distortion (THD), voltage/frequency fluctuations, SAIDI/CAIDI/SAIFI, level of power quality impact, a level of voltage sag/swell events, a level of SAIDI/CAIDI, a level of SAIFI/CAIFI, a level of harmonics content, a power quality impact assessment, a level of no voltage sag/swell events, a level of SAIDI/CAIDI, a level of SAIFI/CAIFI, or harmonics content.

At step 290, the distribution zonal controller may determine an adaptive control action for the assigned distribution zone. For example, the distribution zonal controller may determine the adaptive control action for at least one of the sub-zonal control devices 256 or the cluster control devices 264 based on the distribution zonal orchestration index.

In some approaches, the distribution zonal controller may determine the adaptive control action using an adaptive control machine learning model. The adaptive control machine learning model may be trained on at least one of historical sub-zonal operational parameters, simulated sub-zonal operational parameters, historical cluster operational parameters, simulated cluster operational parameters, historical distribution control measures, simulated distribution control measures, simulated distribution zonal adaptive policies, or historical distribution zonal adaptive policies. The adaptive control machine learning model is described in further detail with reference to FIG. 6.

At step 292, the distribution zonal controller may communicate a command to the at least one of the sub-zonal control devices or the cluster control devices based on the adaptive control action.

In some embodiments, the distribution zonal controller may further determine a predictive control action for the assigned distribution zone. The distribution zonal controller may receive forecast data for a sub-zone or cluster. For example, the distribution zonal controller may receive the forecast data from the zonal forecast/planning database 128. The distribution zonal controller may also receive a zonal policy. For example, the distribution zonal controller may receive the zonal policy from the zonal policy database. The distribution zonal controller may then determine the predictive control action based on at least one of the sub-zonal operational data, the cluster operational data, the forecast data, and the zonal policy.

In some approaches, the distribution zonal controller may determine the predictive control action using a predictive control machine learning model. The predictive control machine learning model may be trained on at least one of historical sub-zonal operational parameters, simulated sub-zonal operational parameters, historical cluster operational parameters, simulated cluster operational parameters, historical distribution control measures, simulated distribution control measures, historical sub-zonal forecast data, simulated sub-zonal forecast data, simulated cluster forecast data, or historical cluster forecast data. In some approaches, the distribution zonal controller may determine the adaptive control action using an adaptive control machine learning model. The adaptive control machine learning model may be trained on at least one of historical sub-zonal operational parameters, simulated sub-zonal operational parameters, historical cluster operational parameters, simulated cluster operational parameters, historical distribution control measures, simulated distribution control measures, simulated distribution zonal adaptive policies, or historical distribution zonal adaptive policies. The predictive control machine learning model is described in further detail with reference to FIG. 6.

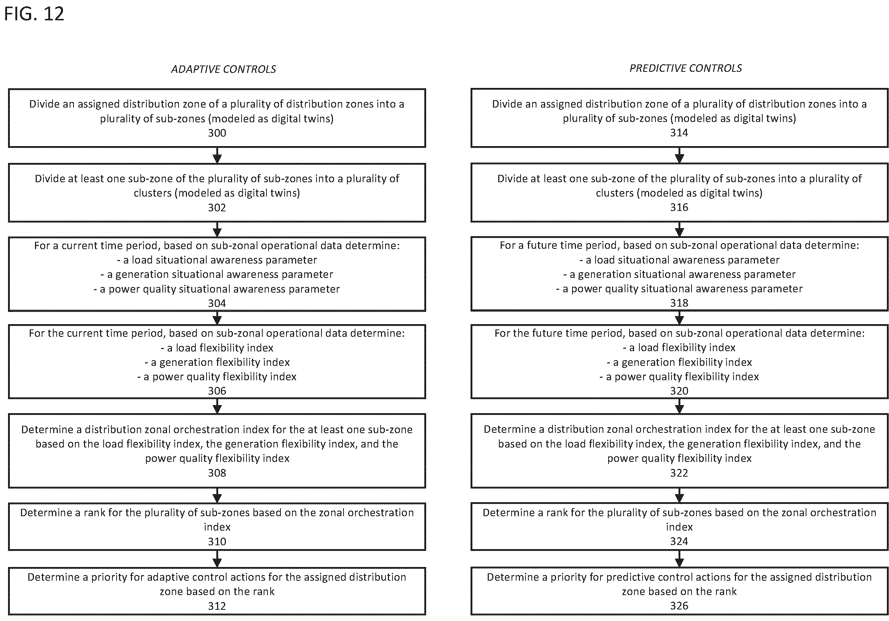

FIG. 12 illustrates a method of operating a distribution zonal controller to determine a priority for adaptive control actions and predictive control actions in a distribution zone, in accordance with some embodiments. In some examples, the distribution zonal controller is the distribution zonal controller 120 described with reference to FIGS. 1 and 6 and the distribution zone is the distribution zone 104 described with reference to FIGS. 1, 6, and 9. It is contemplated that one or more steps of the method of FIG. 12 may be performed in conjunction with the method of FIG. 11.

Steps 300-312 illustrate a method for determining a priority for adaptive control actions in the distribution zone.

At step 300, the distribution zonal controller may divide an assigned distribution zone of a plurality of distribution zones into a plurality of sub-zones. The plurality of sub-zones may be modeled as digital twins by the distribution zonal controller. A digital twin can model a sub-zone (or, in some embodiments, a zone) and may learn through data of the sub-zone to understand and/or predict operational characteristics of the sub-zone and how the sub-zone behaves in a particular scenario. A digital twin model of a sub-zone may base predictions on historical data, operational data, and any other available data related to the particular sub-zone. For example, the digital twin model may be used to determine how a sub-zone responds to a drop in current.

A digital twin may model a particular asset or assets in a sub-zone. **In** a power grid distribution system, the digital twin may model an asset in the sub-zone as a software asset. For example, a sub-zone may include a transformer as a physical asset. The digital twin model associated with the sub-zone may then include a 3D model of the transformer that analyzes historical data of the transformer in order to help an operator understand how the transformer is operating, loading, reacts, etc. A digital twin model of the sub-zone may be accessed by an operator to aid in decision making or to predict how the asset with operate or perform in certain scenarios.

At step 302, the distribution zonal controller may also divide at least one sub-zone of the plurality of sub-zones into a plurality of clusters. The plurality of clusters may also be modeled as digital twins by the distribution zonal controller. The digital twin models for clusters are similar to those described above for sub-zones.

At step 304, the distribution zonal controller may determine one or more of the following parameters for a current time-period, based on sub-zonal operational data: a load situational awareness parameter, a generation situational awareness parameter, or a power quality situational awareness parameter.

At step 306, the distribution zonal controller may determine one or more of the following indices for a current time-period, based on sub-zonal operational data: a load flexibility index, a generation flexibility index, or a power flexibility index.

At step 308, the distribution zonal controller may determine a distribution zonal orchestration index for the at least one sub-zone based on the load flexibility index, the generation flexibility index, and the power quality flexibility index.

At step 310, the distribution zonal controller may determine a rank for the plurality of sub-zones based on the zonal orchestration index. The rank may indicate a level of priority for at least one of an adaptive control action, an emergency situation, or planning for a future time interval. In some examples, the emergency situation includes at least one of a fault or a weather related situation.

At step 312, the distribution zonal controller may determine a priority for adaptive control actions for the assigned distribution zone based on the rank. The distribution zonal controller may also communicate one or more commands to distribution zonal control devices in the assigned distribution zone, where the command is configured to carry out the adaptive control action.

Steps 314-326 illustrate a method for determining a priority for predictive control actions in the distribution zone.

At step 314, the distribution zonal controller may divide an assigned distribution zone of a plurality of distribution zones into a plurality of sub-zones. The plurality of sub-zones may be modeled as digital twins by the distribution zonal controller.

At step 316, the distribution zonal controller may divide at least one sub-zone of the plurality of sub-zones into a plurality of clusters. The plurality of clusters may be modeled as digital twins by the distribution zonal controller.

At step 318, the distribution zonal controller may determine one or more of the following parameters or a future time-period, based on sub-zonal operational data: a load situational awareness parameter, a generation situational awareness parameter, or a power quality situational awareness parameter.

At step 320, the distribution zonal controller may determine one or more of the following indices or a future time-period, based on sub-zonal operational data: a load flexibility index, a generation flexibility index, or a power quality flexibility index.

At step 322, the distribution zonal controller may determine a distribution zonal orchestration index for the at least one sub-zone based on the load flexibility index, the generation flexibility index, and the power quality flexibility index.

At step 324, the distribution zonal controller may determine a rank for the plurality of sub-zones based on the zonal orchestration index.

At step 326, the distribution zonal controller may determine a priority for predictive control actions for the assigned distribution zone based on the rank.

### Distribution Intelligent Fault Location, Isolation, and Service Restoration (FLISR)

In some embodiments, the systems and methods provided herein may divide a distribution zone into sub-zones and clusters to perform intelligent fault location, isolation, and service restoration in the distribution zone. A distribution zonal controller assigned to the distribution zone may then determine power restoration feasibility indices for the distribution zone on a sub-zone or cluster-wise basis. The power restoration feasibility index may guide the prioritization of power restoration control actions in the distribution zone.

FIG. 13 illustrates a method of operating a distribution zonal controller to determine and execute restoration control actions in a distribution zone, in accordance with some embodiments. In some examples, the distribution zonal controller is the distribution zonal controller 120 described with reference to FIGS. 1 and 6 and the distribution zone is the distribution zone 104 described with reference to FIGS. 1, 6, and 9.

At step 330, the distribution zonal controller may receive sub-zonal operational data for an assigned distribution zone. For example, the distribution zonal controller 120 may receive the sub-zonal operational data from one or more of the sub-zonal measurement devices 254.

In some embodiments, the distribution zonal controller may determine at least one sub-zonal characteristic for the assigned sub-zone based on the sub-zonal operational data. Sub-zonal characteristics may include at least one of critical load, non-critical load, electric vehicle load, vehicle to grid generation, load under demand response (DR) scheme, prosumers generation (PV/DER), voltage/current unbalance, total harmonic distortion, micro-grid enabled generation, or micro-grid enabled load.

At step 332, the distribution zonal controller may receive cluster operational data for the assigned distribution zone. For example, the distribution zonal controller 120 may receive cluster operational data from one or more of the cluster measurement devices 262.

In some embodiments, the distribution zonal controller may determine at least one cluster characteristic for the assigned sub-zone based on the sub-zonal operational data. Cluster characteristics may include at least one of critical load, non-critical load, electric vehicle load, vehicle to grid generation, load under demand response (DR) scheme, prosumers generation (PV/DER), voltage/current unbalance, total harmonic distortion, micro-grid enabled generation, or micro-grid enabled load.

At step 334, the distribution zonal controller may determine a power restoration feasibility index for at least one sub-zone in the assigned distribution zone based on at least one of the sub-zonal operational data or the cluster operational data.

In some embodiments, the distribution zonal controller may determine the power restoration feasibility index based on at least one of a load restoration index, a generation flexibility index, or a resiliency index.

The distribution zonal controller may determine the load restoration index for at least one the plurality of clusters based on a load situational awareness parameter. The load restoration index may be a value representing a level at which load is able be adjusted. The distribution zonal controller may determine the load situational awareness parameter for at least one of the plurality of clusters based on the at least one cluster characteristic. The load situational awareness parameter may be indicative of load characteristics. In some examples, the load situational awareness parameter may include at least one of a load available for curtailment, a load available for demand response execution, an electric vehicle load, an MG enabled load, a level of flexibility of load dispatch, a percentage of critical load that is serviceable, a level of non-critical load available for curtailment, or a level of load registered under DR scheme.

The distribution zonal controller may determine the generation flexibility index for at least one of the plurality of clusters based on a generation situational awareness parameter. The generation flexibility index is a value representing a level at which generation is able be adjusted. The distribution zonal controller may determine the generation situational awareness parameter based on the at least one cluster characteristic. The generation situational awareness parameter may be indicative of generation characteristics. In some examples, the generation situational awareness parameter may include at least one of incoming power generation, vehicle to grid generation, micro-grid enabled generation, PV enabled generation, distributed energy resource enabled generation, a level of flexibility of generation dispatch, a level of DER generation available, a level of micro-grid generation available for grid supply, or a level of ancillary services available.

The distribution zonal controller may determine for at least one of the plurality of clusters the resiliency index based on a power restoration situational awareness parameter. The resiliency index may be a value representing a level of power reliability. The distribution zonal controller may determine the power restoration situational awareness parameter based on the at least one cluster characteristic. The power restoration situational awareness parameter may be indicative of power restoration characteristics. In some examples, the power restoration situational awareness parameter may include at least one of a voltage or current imbalance, a voltage violation, a frequency violation, a dielectric loading of assets, a total harmonic distortion of assets, a generation-load imbalance, a system average interruption duration index (SAIDI), a customer average interruption duration index (CAIDI), system average interruption frequency index (SAIFI), or a customer average interruption frequency index (CAIFI), a number of assets under outage, a time to restore, a number of assets overloaded, a time to restore, a generation/load balance, or an amount of load not serviceable.

At step 336, the distribution zonal controller may determine a power restoration control action based on the power restoration feasibility index. In some examples, the power restoration control action may adjust a setting for one of more of the sub-zonal control devices 256 for restoration of the power grid system. In some examples, the power restoration control action may adjust a setting for one of more of the cluster control devices 264 for restoration of the power grid system.

In some embodiments, the distribution zonal controller may determine the restoration control action based on a restoration machine learning model. The restoration machine learning model may be trained on at least one of historical sub-zonal operational parameters, historical cluster operational parameters, historical resiliency indices, historical restoration control measures, historical fault locations, historical fault type, historical fault severity level, historical restoration times, or simulated faults per location data.

At step 338, the distribution zonal controller may communicate a command to one or more of the sub-zonal control devices or to one or more cluster control devices based on the power restoration control action. In some examples the distribution zonal controller 120 may communicate the command to the sub-zonal control devices 256 or to the cluster control devices 264. In some approaches, at least one of the plurality of sub-zones may include an associated sub-zonal controller. The sub-zonal controller may be communicatively coupled to the distribution zonal controller and configured to implement the restoration control action.

In some embodiments, the distribution zonal controller may also determine a predictive restoration control action for the assigned distribution zone based on the forecasted power restoration feasibility index. The distribution zonal controller may anticipate or predict a fault or event that will occur in a distribution zone. The predictive restoration control action may be an action taken to avoid such a predicted fault or event. If it is not possible to avoid the fault or event, the predictive restoration control action may be an action that remediates, mitigates, or otherwise responds to a predicted fault or event in a distribution zone. When determining a predictive restoration control action, the distribution zonal controller may ensure that restoration is possible without creating a physical challenge for the distribution grid. For example, a predictive restoration control action may ensure that power or, in some instances, maximum power, is restored in the distribution zone. The controller may use the power restoration feasibility index for a particular distribution zone to determine a predictive restoration control action. For example, for a fault at a particular location in a distribution zone, the distribution zonal controller will determine a power restoration feasibility index. The power restoration feasibility index may indicate that, if a fault occurs at that particular location, the feasibility of restoring power may be less or more. When the power restoration feasibility index indicates restoration is less feasible, an operator may consider adding additional generation or controlling demand in the distribution zone or may create a plan to reboot some power to that particular location.

In some embodiments, the distribution zonal controller determines the predictive restoration control action based on a predictive restoration machine learning model. The predictive restoration machine learning model may be is trained on at least one of historical sub-zonal operational parameters, simulated sub-zonal operational parameters, historical cluster operational parameters, simulated cluster operational parameters, historical forecasted resiliency indices, historical restoration control measures, historical fault locations, historical fault type, historical fault severity level, historical restoration times, or simulated faults per location data.

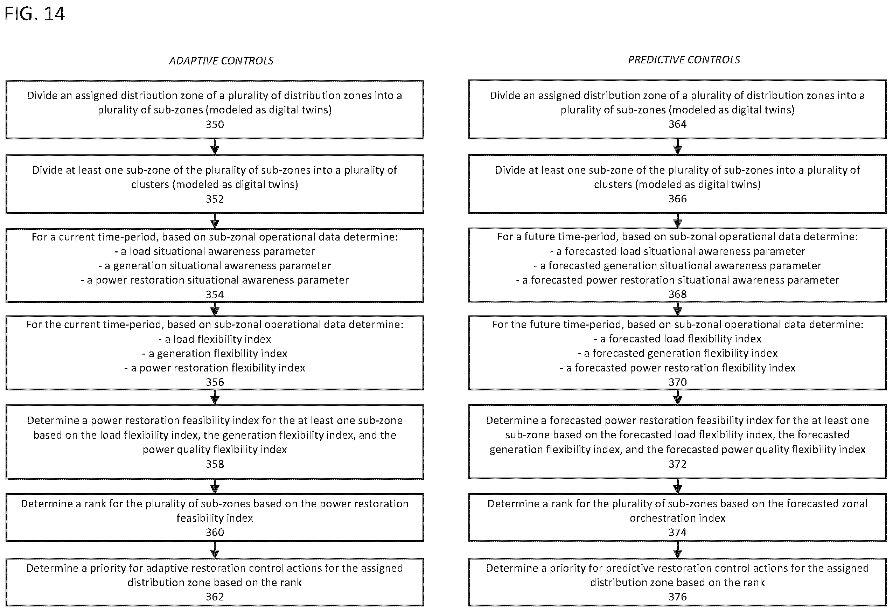

FIG. 14 illustrates a method of operating a distribution zonal controller to determine a priority for adaptive control actions and predictive control actions in a distribution zone, in accordance with some embodiments. In some examples, the distribution zonal controller is the distribution zonal controller 120 described with reference to FIGS. 1 and 6 and the distribution zone is the distribution zone 104 described with reference to FIGS. 1, 6, and 9.

Steps 350-362 show a method for determining a priority for adaptive control actions in the distribution zone.

At step 350, the distribution zonal controller may divide an assigned distribution zone of a plurality of distribution zones into a plurality of sub-zones. The sub-zones may be modeled as digital twins.

At step 352, the distribution zonal controller may divide at least one sub-zone of the plurality of sub-zones into a plurality of clusters. The clusters may be modeled as digital twins.

At step 354, the distribution zonal controller may determine situational awareness parameters for a current time-period based on the sub-zonal operational data and/or the cluster operational data. The situational awareness parameters may include at least one of a load situational awareness parameter, a generation situational awareness parameter, or a power restoration situational awareness parameter. The distribution zonal controller may determine the situational awareness parameters for at least one of the sub-zones and/or for at least one of the clusters.

At step 356, the distribution zonal controller may determine one or more indices for a current time-period based on the sub-zonal operational data and/or the cluster operational data. The indices may include at least one of a load flexibility index, a generation flexibility index, or a power restoration flexibility index. The distribution zonal controller may determine the indices for at least one of the sub-zones and/or for at least one of the clusters.

At step 358, the distribution zonal controller may determine a power restoration feasibility index for the at least one sub-zone based on the load flexibility index, the generation flexibility index, and the power quality flexibility index.

At step 360, the distribution zonal controller may determine a rank for the plurality of sub-zones based on the power restoration feasibility index. The rank may indicate an order for restoration in the assigned distribution zone.

At step 362, the distribution zonal controller may determine a priority for adaptive restoration control actions for the assigned distribution zone based on the rank.

Steps 364-376 show a method for determining a priority for predictive control actions in the distribution zone.

At step 364, the distribution zonal controller may divide an assigned distribution zone of a plurality of distribution zones into a plurality of sub-zones. The distribution zonal controller may model the sub-zones as digital twins.

At step 366, the distribution zonal controller may divide at least one sub-zone of the plurality of sub-zones into a plurality of clusters. The distribution zonal controller may model the clusters as digital twins.

At step 368, the distribution zonal controller may determine forecasted situational awareness parameters for a future time-period based on the sub-zonal operational data and/or the cluster operational data. The forecasted situational awareness parameters may include at least one of a load situational awareness parameter, a generation situational awareness parameter, or a power restoration situational awareness parameter. The distribution zonal controller may determine the forecasted situational awareness parameters for at least one of the sub-zones and/or for at least one of the clusters.

At step 370, the distribution zonal controller may determine forecasted indices for a future time-period based on the sub-zonal operational data: a forecasted load flexibility index, a forecasted generation flexibility index, or a forecasted power restoration flexibility index. The distribution zonal controller may determine the forecasted indices for at least one of the sub-zones and/or for at least one of the clusters.

At step 372, the distribution zonal controller may determine a forecasted power restoration feasibility index for the at least one sub-zone based on the forecasted load flexibility index, the forecasted generation flexibility index, and the forecasted power quality flexibility index.

At step 374, the distribution zonal controller may determine a rank for the plurality of sub-zones based on the forecasted power restoration feasibility index. The rank may indicate an order for restoration in the assigned distribution zone.

At step 376, the distribution zonal controller may determine a priority for predictive restoration control actions for the assigned distribution zone based on the rank.

### Federated Grid Management System

In some embodiments, the systems and methods provided herein may use a federated grid management system to provide an aggregated data representation of all physical assets in a power grid to provide a unified view of the power grid across markets, planners, operators, and prosumers. Such an aggregated data representation may provide increased visibility and data sharing across the power grid. An aggregated data representation may also provide increased data fidelity at a local level with power grid edge intelligence to facilitate increased visibility and control for decentralized locational decisions. The federated grid management system may include a digital twin, for example a cloud-based digital twin, to improve visibility for increased data sharing and collaboration across all participants or users of the power grid.

In some aspects, the federated grid management system may tailor the data presented to a user of the power grid. In this manner, the federated grid management system may provide data exchange and control for transmission system operators (TSOs), distribution system operators (DSOs), and distribution network operators (DNOs). Traditional approaches for power grid data acquisition and modelling may use an "everything" approach in which all data is visible and accessible and not tailored to a specific power grid user or participant. The "everything" approach may be both technically and financially prohibitive as the complexities of power grids increase with accelerated decarbonization and electrification aspirations. The federated grid management system may exchange and control data on the power grid based on participants or users of a power grid. Providing data fidelity that is tailored, for example, based on a location in the power grid and a particular user or participant may improve digitalization, automation, and orchestration of the power grid for different planners, operators, and participants connected to the power grid. Tailoring the exchange and control of data in this manner may help to improve data visibility in the power grid, for example, as variable renewable energy (VRE) and distributed energy resources (DERs) increase.

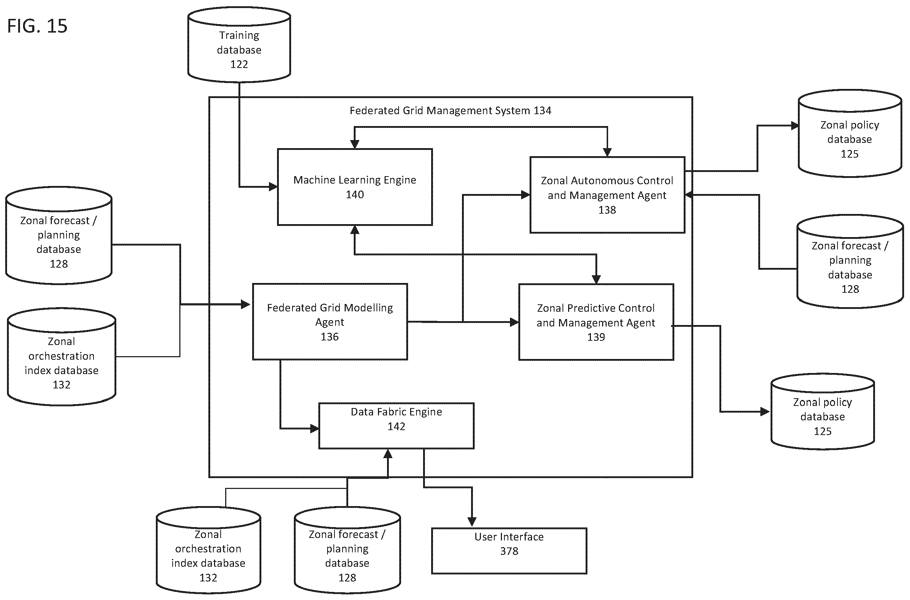

FIG. 15 illustrates the federated grid management system 134, in accordance with some embodiments. The federated grid management system 134 may include a federated grid modelling agent 136, a zonal autonomous control and management agent 138, a zonal predictive control and management agent 139, a machine learning engine 140, and a data fabric engine 142.

The federated grid modelling agent 136 may be configured to model a power grid with a plurality of zones that have a unified structure. The unified structure may be a zone topology, a zone network resemblance (e.g., representing zones in a common format such that a power grid network has a unified structure), a zone representation, or a zone model that is the same for each of the plurality of zones. The federated grid modelling agent 136 may model a transmission grid as a plurality of transmission zones, the plurality of transmission zones having a unified structure. The federated grid modelling agent 136 may also model a distribution grid as a plurality of distribution zones, the plurality of distribution zones having a unified structure. In some examples, the plurality of distribution zones may be modelled as loads in the transmission grid. The federated grid modelling agent 136 may be in communication with the training database 122.

The zonal autonomous control and management agent 138 may be configured to determine or identify one or more adaptive control actions in the power grid system 100. For example, the zonal autonomous control and management agent 138 may determine an adaptive control action based on at least one of zonal forecast data and operational data (e.g., a zonal orchestration index) for the transmission zone 102. In some aspects, one or more machine learning models of the machine learning engine 140 may be integrated with the zonal autonomous control and management agent 138. For example, an adaptive control machine learning model may determine or identify the adaptive control actions for the transmission zone 102. The adaptive control machine learning model may be trained on at least one of historical forecast data or historical zonal operational data for the plurality of zonal controllers. The zonal autonomous control and management agent 138 may be in communication with and receive data, such as forecast data, from the planning database 128. The zonal autonomous control and management agent 138 may also be in communication with one or more of the transmission zonal controller 112. In this manner, zonal autonomous control and management agent 138 may be configured to communicate or transmit the adaptive control actions to one or more of the transmission zonal controller 112.

The zonal predictive control and management agent 139 may be configured to determine or identify one or more predictive control actions for a transmission zone 102 in the power grid system 100. For example, the zonal predictive control and management agent 139 may determine a predictive control action based on at least one of an addition to the power grid or operational data (e.g., a zonal orchestration index) for the transmission zone 102. In some aspects, one or more machine learning models of the machine learning engine 140 may be integrated with the zonal predictive control and management agent 139. For example, a predictive control machine learning model may determine or identify the predictive control actions for the transmission zone 102. The predictive control machine learning model may be trained on at least one of historical zonal operational data for the plurality of zonal controllers or a historical addition to the power grid. The zonal predictive control and management agent 139 may also be in communication with one or more of the transmission zonal controller 112. In this manner, zonal predictive control and management agent 139 may be configured to communicate or transmit the predictive control actions to one or more of the transmission zonal controller 112. The data fabric engine 142 may be in communication with a user interface 378. The data fabric engine 142 may tailor the level of data presented via the user interface 378 based on a particular user or application. In this manner, the data fabric engine 142 may control the level of data fidelity presented to a user via the federated grid management system 134. The data fabric engine 142 places incoming data from a plurality of distribution zones in an internally common or consistent format such that a model of the distribution grid is uniform. The data fabric engine 142 also tailors the presentation of data on the distribution grid to a level of detail (e.g., high-level versus zoomed-into a specific asset or level of interest in the distribution system) specific for a particular user of the distribution grid. Thus, the data fabric engine 142 may both automatically represent or store data in a common format and tailor the visualization or presentation of data on the distribution grid to a particular level.

Further, in some embodiments, the federated grid management system 134 may be in communication with one or more of the distribution zonal controllers 120 or with one or more of the transmission zonal controllers 112, as shown in FIG. 1. Data or information received from the zonal controllers may be stored in a database associated with the federated grid management system 134. Data or information received from the zonal controllers may be organized, mapped, stored, or learned in a unified manner by the federated grid management system 134. For example, the data or information from the zonal controllers may be organized, mapped, or tagged in a standardized manner so that the federated grid management system 134 may identify the data or information as belonging to a particular type of zone based on the manner in which it is organized, mapped, or tagged. The federated grid management system 134 may then apply or use the information or data associated with a zone accordingly.

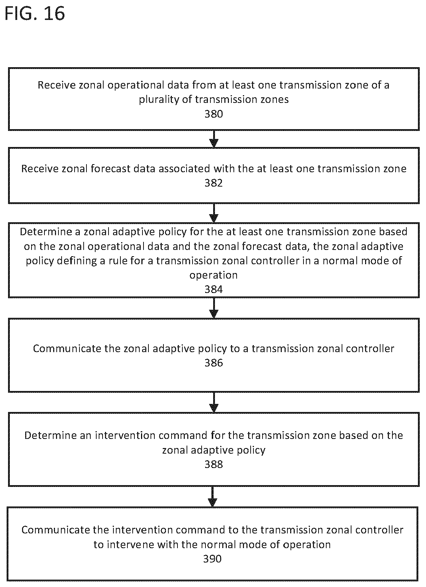

FIG. 16 is a method of operating federated grid management system to determine an adaptive policy for a transmission zone and communicate intervention commands for the transmission zone, in accordance with some embodiments. In some examples, the federated grid management system may be the federated grid management system 134 described with reference to FIGS. 1 and 15. It is contemplated that the method of FIG. 16 may be performed by one or more components of the federated grid management system 134.

At step 380, the federated grid management system may receive zonal operational data from at least one transmission zone of a plurality of transmission zones. The zonal operational data may include, for example, zonal orchestration indices determined by a transmission zonal controller associated with the at least one transmission zone.

At step 382, the federated grid management system may receive zonal forecast data associated with the at least one transmission zone. In some examples, the federated grid management system may receive the zonal forecast data from a zonal forecast/planning database. In some examples, the federated grid management system may receive zonal forecast data from a transmission zonal controller associated with the at least one transmission zone.

At step 384, the federated grid management system may determine a zonal adaptive policy for the at least one transmission zone based on the zonal operational data and the zonal forecast data. The zonal adaptive policy may define one or more rules for a transmission zonal controller in a normal mode of operation.

At step 386, the federated grid management system may communicate the zonal adaptive policy to a transmission zonal controller associated with the at least one transmission zone. The federated grid management system may also communicate the zonal adaptive policy to a transmission zonal controller associated with another one of the plurality of transmission zones.

At step 388, the federated grid management system may determine an intervention command for the transmission zone based on the zonal adaptive policy. In some examples, the intervention command may be communicated to one or more transmission control devices associated with the at least one transmission zone. The intervention command may, for example, intervene with the operation of the transmission zonal controller associated with the at least one transmission zone. In one example, zonal policies for the at least one transmission zone may be designed using analysis from the federated grid management system such that if an emergency control action is taken in a zone, the federated grid management system may issue an intervention command to the transmission zonal controller to handle the emergency. Such an emergency may be a fault in the transmission zone where local protection is unable to control the fault or has failed to operate. In such a scenario where there is a power failure in a transmission zone but restoration did not occur, the federated grid management system may issue an intervention command to reroute power from another source, such as an adjacent transmission zone, in order to restore power.

At step 390, the federated grid management system may communicate the intervention command to the transmission zonal controller. Communicating the intervention command to the transmission zonal controller may intervene with the normal mode of operation.

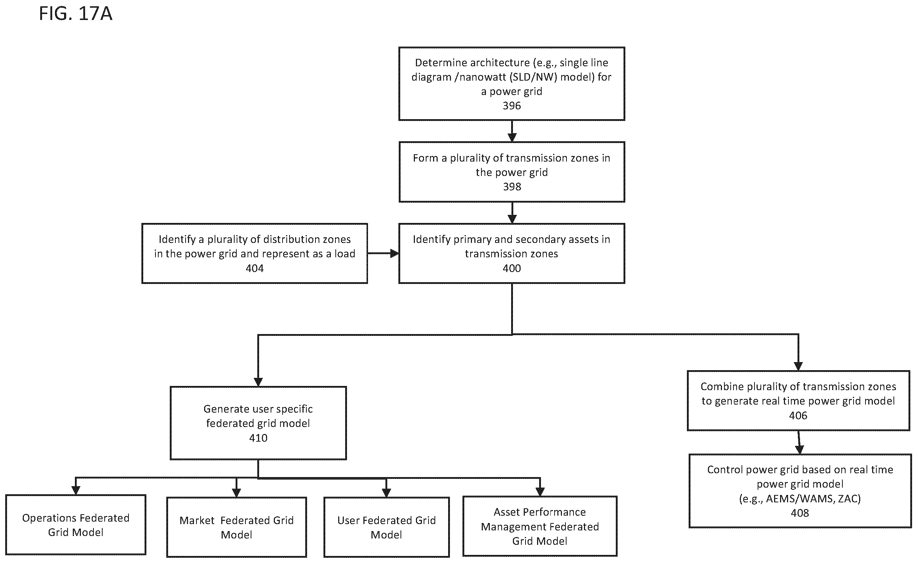

FIG. 17A is a method of operating federated grid management system, in accordance with some embodiments. In some examples, the federated grid management system may be the federated grid management system 134 described with reference to FIGS. 1 and 15. It is contemplated that the method of FIG. 16 may be performed by one or more components of the federated grid management system 134.

At step 396, the federated grid management system may determine the architecture for a power grid. The power grid may include a transmission grid and a distribution grid. The architecture of the power grid may be determined, for example, based on a single line diagram /nanowatt (SLD/NW) model for the power grid.

At step 398, the federated grid management system may form a plurality of transmission zones in the power grid. In some examples, the federated grid management system may form the plurality of transmission zones based on the assets (e.g., primary assets and/or secondary assets) and interconnections in the power grid. The federated grid management system may delineate or form the transmission zones based on one or more assets in and one or more policies or rules that define the manner in which transmission zones are to be formed in a power grid. It is contemplated that the federated grid management system may dynamically form zones so that the delineation between transmission zones changes to adapt to assets being added to or removed from the power grid.

At step 400, the federated grid management system may identify primary and secondary assets in each of the plurality of transmission zones.

At step 404, the federated grid management system may also identify a plurality of distribution zones in the power grid. The federated grid management system may represent or model the distribution zones as loads in one or more of the plurality of transmission zones. In some embodiments, the federated grid management system may also identify, form, or delineate transmission zones in the power grid.

At step 406, the federated grid management system may combine the plurality of transmission zones to generate real-time power grid model.

At step 408, the federated grid management system may control the power grid based on real time power grid model. For example, the federated grid management systems may issue one or more intervention commands to transmission zonal controllers in the transmission zones to intervene with a normal mode of operation.

At step 410, the federated grid management system may also generate a user specific federated grid model. The user specific federated grid model may be tailored, for example in data presentation, to a particular user of the power grid. User specific federated grid models may include one or more of an operations federated grid mode, a market federated grid model, a user federated grid mode, or an asset performance management federated grid model.

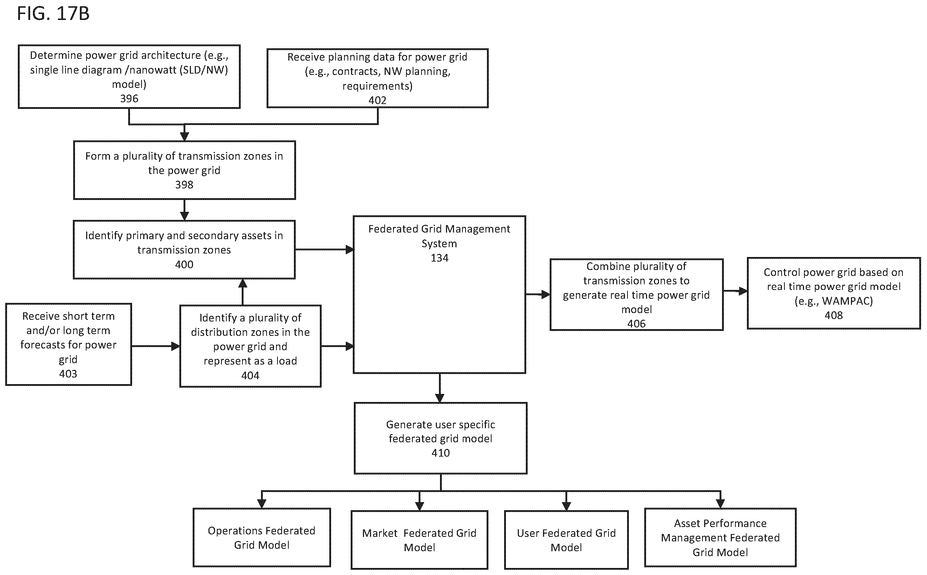

FIG. 17B is another method of operating federated grid management system, in accordance with some embodiments. In some examples, the federated grid management system may be the federated grid management system 134 described with reference to FIGS. 1 and 15. It is contemplated that the method of FIG. 16 may be performed by one or more components of the federated grid management system 134.

At step 396, the federated grid management system 134 determines a power grid architecture. The federated grid management system 134 may determine the power grid architecture, for example, via a single line diagram (SLD) and/or a nanowatt (NW) model of the power grid.

At step 402, the federated grid management system 134 also receives planning data for the power grid. The planning data may include planned or future contracts, nanowatt (NW) planning, or other requirements for the power grid. The planning data may be associated with a state of the power grid at some time in the future. **In** some examples, a user may input planning data into the federated grid management system 134 via a user interface (e.g., the user interface 378). **In** other examples, the federated grid management system 134 may receive planning data from the zonal forecast/planning database 128.

At step 398, the federated grid management system 134 forms a plurality of transmission zones in the power grid 398. **In** some examples, the federated grid management system 134 forms the plurality of transmission zones based on one or more of the power grid architecture or the planning data. The federated grid management system 134 may form or determine the delineation of transmission zones in the power grid, for example, based on one or more policies. The policies may define for example rules for forming or delineating transmission zones within a power grid based on the power grid architecture or the planning data. Planning data may indicate new components that will be added to the power grid in the future and that may impact the power grid architecture. As such, transmission zones may be rearranged based on planning data. In one example, a policy may dictate or include a rule specifying that zones are formed based on industry, microgrids (e.g., solar or wind assets), power supply sources, or dominant load clusters present in power grid architecture. Policies may specify that industry, microgrids, power supply sources, or dominant load clusters are formed as zones. In another example, a substation, including incoming and outgoing lines from the substation, may be one zone. Rules in the policies may form zones based on dominant factors (e.g., load rich, microgrid) of the power grid as indicated by the power grid architecture.

At step 400, the federated grid management system 134 may also identify primary assets and secondary assets in the plurality of transmission zones that have been formed. As discussed further below, a primary asset may be any piece of electrical distribution equipment. For example, the primary asset may include at least one of a transformer, a breaker, or a generator. a secondary asset may be an intelligent electronic device (IED) that controls a primary asset. For example, the secondary asset may be a relay, a gate control unit, or a gateway. The secondary asset may be an intelligent electronic device (IED) that controls a primary asset. The federated grid management system 134 may identify primary assets and secondary assets in the power grid, for example, based on the power grid architecture and/or the planning data.

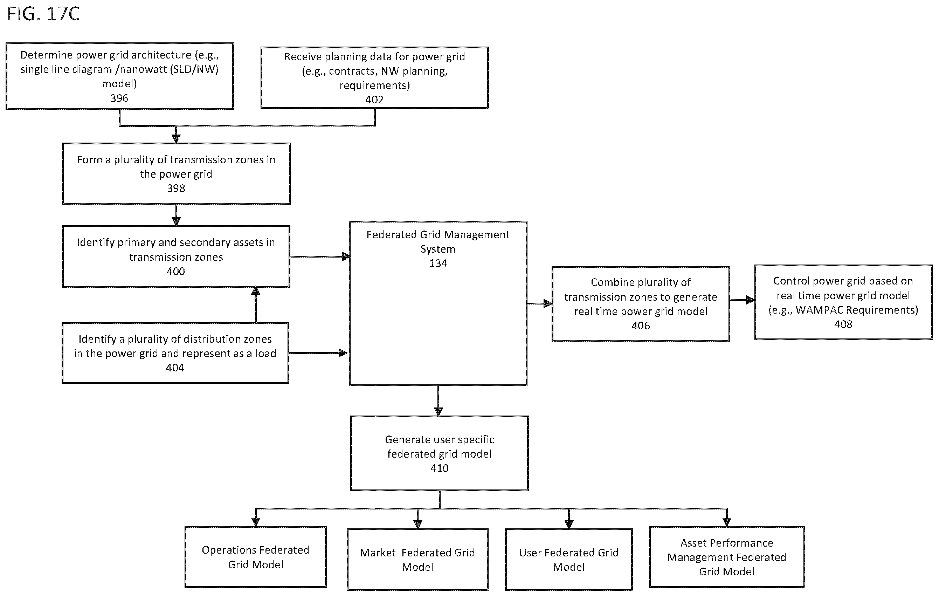

At step 403, the federated grid management system 134 may receive short term and/or long term forecasts for the power grid. In some examples, a user may input forecast data, including short term and/or long term forecasts, into the federated grid management system 134 via a user interface (e.g., the user interface 378). In other examples, the federated grid management system 134 may receive forecast data, including short term and/or long term forecasts, from the zonal forecast/planning database 128. In the embodiment shown in FIG. 17C, step 403 is omitted.

At step 404, the federated grid management system 134 identifies a plurality of distribution zones in the power grid. The federated grid management system 134 models or represents one or more of the plurality of distribution zones as a load in the transmission system, that is, as loads coupled to the plurality of transmission zones formed at step 398.

At step 406, the federated grid management system 134 combines the plurality of transmission zones to generate real time power grid model. The real time power grid model may capture both data on transmission zones and on the distribution zones (e.g., as the distribution zones are modeled as loads in the transmission zones).

At step 408, the federated grid management system 134 may control power grid based on real time power grid model. For example, the federated grid management system 134 may transmit or issue one or more intervention commands or actions to the transmission zonal controllers 112 and/or the distribution zonal controllers 120 to control power grid operation.

At step 410, the federated grid management system 134 generates a user specific federated grid model 410. The user specific federated grid model 410 or portions thereof may be presented to a user, for example via the user interface 378. The user specific federated grid model may include one or more of an operations federated grid model, a market federated grid model, a user federated grid model, or an asset performance management federated grid model.

The operations federated grid model may display data associated with and/or facilitate the management of zonal asset control for the plurality of transmission and/or distribution zones. The operations federated grid model may also display and/or facilitate the management of operating expenditures, in some aspects, on a zone-wise basis. The operations federated grid model may include one or more load control modules (LCMs) for the plurality of transmission and/or distribution zones. The operations federated grid model may also allow a user to view or manage transmission system reliability (TSR) and resource management (RM) for the plurality of transmission and/or distribution zones.

The market federated grid model may display data associated with and/or facilitate the management of virtual power plants (VPP) in the power grid. The market federated grid model may also include or be coupled with a balancing authority and/or bidding analysis system. Further, the market federated grid model may also include or be coupled with one or more Customer Management Systems (CMS) to facilitate a power grid customers management of their load demand and other interactions with the power grid.

The user federated grid model may display data on and/or facilitate the management of transmission systems operations (TSO) for the plurality of transmission zones and/or distribution systems operations (DSO) for the plurality of distribution zones. In addition, the user federated grid model may display data on and/or facilitate the management of one or more renewable energy networks (REN), distributed energy resources (DER), microgrids (MG), and/or aggregators (Agg).

The asset performance management federated grid model display data on and/or facilitate zonal asset management for one or more of the plurality of distribution zones and/or the plurality of distribution zones. In addition, the asset performance management federated grid model display data on and/or facilitate Operations and Maintenance (O&M) and/or the fleet management of assets for one or more of the plurality of distribution zones and/or the plurality of distribution zones.

### Zonal Asset Management

In some embodiments, the systems and methods provided herein may be used to manage assets within a zone of a power grid system, for example, via an asset management controller. The asset management controller may manage one or more assets in a distribution zone and/or a transmission zone. The zonal asset management controller may manage both primary assets and secondary assets with a zone. Traditional approaches for asset management generally include two separate management systems-one for primary assets and one for secondary assets. In traditional approaches, systems for primary assets and systems for secondary assets may not communicate or interact with each other. The approaches described herein utilize a single asset management system or controller for both primary assets and secondary assets. Using a single asset management system or controller may provide a system with improved flexibility and modularity such that a utility may deploy the system on an application-by-application basis. The single asset management system provides simplified asset management that may be more efficient and reduce operational expenses, for example, by avoiding having to use and increase additional human resources to configure assets, evaluate their health, and collect data. The single asset management system may provide an overall view for asset usage, optimization, and life cycle management.

In some aspects, the zonal asset management architectures described herein may enable one or more of asset fleet management, primary asset management, secondary asset management, asset life-cycle management, zonal advanced analytics, zonal performance forecasts, and zonal autonomous control. The asset management controller may adjust a depth of detail at a zonal level. Primary asset management may include the provision of one or more of health, operation, and control actions or recommendations for a primary asset. Secondary asset management may include the provision of autonomous device operations, upgrades, and management for a secondary asset. Asset life-cycle management may include the provision of end-to-end asset replacement strategies, plans, recommendations, and actions associated therewith for an asset. Zonal advanced analytics may include asset-wise and/or zone-wise intelligence in the form of a digital twin system. Zonal performance forecasts may include asset failure predictions, asset risk assessments, asset forecasts, and operation and maintenance (O & M) planning for the short-term, mid-term, and long-term.

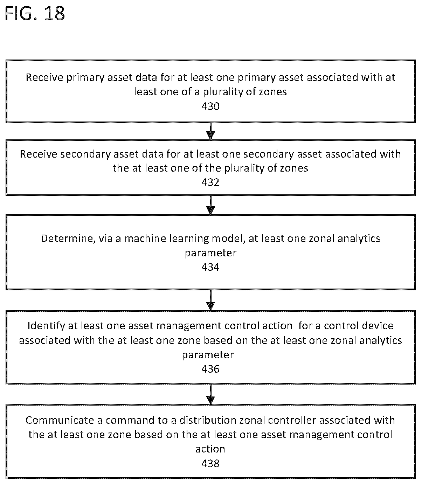

FIG. 18 is an exemplary method of operating a power grid system. The method may be performed, for example, by an asset management controller. In the method, the asset management controller measures, monitors, and consolidates primary asset data and secondary asset data. In some examples, the method or portions thereof may be performed the asset management controller 145 of the power grid system 100. The asset management controller may be associated with one or more of a plurality of zones. For example, the asset management controller may be associated with one or more of the transmission zones 102 and/or with one or more of the plurality of distribution zones 104.

At block 430, the asset management controller receives primary asset data for at least one primary asset associated with at least one of a plurality of zones. A primary asset may be any piece of electrical distribution equipment. For example, the primary asset may include at least one of a transformer, a breaker, or a generator. The primary asset data may be any parameter related to the operation or performance of a primary asset. The primary asset data may indicate the health or well-being of assets. Non-limiting examples of primary asset data include transformer frequency, loading, and power factor, as measured by a secondary asset (e.g., an IED).

At block 432, the asset management controller receives secondary asset data for at least one secondary asset associated with the at least one of the plurality of zones. The secondary asset may be an intelligent electronic device (IED) that controls a primary asset or any other asset that protects, monitors, controls, or measures data associated with a primary asset. The secondary asset may be a relay, a gate control unit, or a gateway. The secondary asset data may be any parameter related to the operation or performance of a secondary asset. Non-limiting examples of secondary asset data include IED status, security protocol, and communication details. Secondary asset data may be any data related to an IDE and, in some examples, may be provided by the manufacturer of the IED.

At block 434, the asset management controller determines, via at least one machine learning model, at least one zonal analytics parameter. The zonal analytics parameter may include at least one of a process analytics parameter, a health analytics parameter, a performance analytics parameter, or a security analytics parameter.

The process analytics parameter may include information indicative of at least one of hardware performance, health, or a life cycle of a secondary asset. The process analytics parameter may include at least one of a device computation time, a device performance during an event, hardware diagnostics, firmware logs, device related watchdog events, hardware basic input/output system (BIOS) logs, or device time accuracy.

In some examples, the machine learning model may include a process machine learning model that is trained via at least one of historical primary asset data, historical secondary asset data, or historical process analytics parameters.

The health analytics parameter may be indicative of at least one of a health risk, a performance, a condition state, a criticality, or a reliability of a primary asset. The health analytics parameter may be determined based on data measured from one or more sensors associated with the primary asset. The performance analytics parameter may be indicative of at least one of design constraints or a loading of the primary asset based on thermal characteristics of the at least one primary asset. The performance analytics parameter may be determined based on at least one of historical loading condition, historical loading patters, current loading conditions, or current loading patterns for the primary asset.

In some examples, the machine learning model may include a health machine learning model that is trained via at least one of historical primary asset data, historical secondary asset data, or historical health analytics parameters.

The performance analytics parameter may be indicative of at least one of design constraints or a loading of a primary asset based on thermal characteristics of a primary asset. The performance analytics parameter is determined based on at least one of historical loading condition, historical loading patterns, current loading conditions, or current loading patterns for the primary asset.

In some examples, the machine learning model may include a performance machine learning model that is trained via at least one of historical primary asset data, historical secondary asset data, or historical performance analytics parameters.

The security analytics parameter may be indicative of a communication and cyber security (CCS) risk associated with the secondary asset. The CCS risk may be determined from a security log, a communication log, a sequence of events, or a traffic analysis associated with a device, for example, the secondary asset. In some examples, the CCS risk may relate to a level of bandwidth, a level of latency, a cyber security issue, a security patch upgrade pending, a communication-related misconfiguration, a security related misconfiguration, or a needed update.

In some examples, the machine learning model may include a cyber security machine learning model that is trained via at least one of historical primary asset data, historical secondary asset data, or historical security analytics parameters.

At block 436, the asset management controller identifies at least one asset management control action for a control device associated with the at least one zone based on the at least one zonal analytics parameter.

In some examples, the asset management control action is based on the health analytics parameter and the performance analytics parameter. The asset management control action may be taken by a transmission zonal controller (e.g., executed by a transmission zonal control device 110) or by a distribution zonal controller (e.g., executed by a distribution zonal control device 118) in conjunction with zonal asset management rankings. The asset management control action set management control action may be a loading guideline for the primary asset. The loading guideline may control a loading level on the at least one primary asset to reduce a risk or to re-dispatch sources in another one of the plurality of zones in the power grid system. In one example, if a transformer (e.g., a primary asset) is not in good health and the transformer is supposed to be loaded at 100%, an asset management control action may adjust loading of the transformer to below 100% based the health analytics parameter or performance analytics parameter indicating that transformer health is not good. In another example, if the health analytics parameter or performance analytics parameter indicate that secondary asset (e.g., an IED) is not able to communicate properly, an asset management control action may manage IED communication.

In some embodiments, the asset management controller may determine a zonal situational awareness index for the at least one zone based on the at least one zonal analytics parameter. The zonal situational awareness index may be indicative of at least one of a number of high risk assets, asset criticality, and asset type. The asset management control action may then be determined based on the zonal situational awareness index. The asset management controller may also rank the at least one zone among the plurality of zones based on the zonal situational awareness index. In this manner, the asset management controller may use the zonal situational awareness index to priority asset management control actions. The zonal situational awareness index may be based on based on a number of primary assets and a number of secondary assets in the at least one zone.

At block 438, the asset management controller communicates a command to a distribution zonal controller associated with the at least one zone based on the at least one asset management control action. The command may be communicated to a secondary asset associated with the at least one of the plurality of zones. In some examples, the command is configured to implement the at least one asset management control action on a primary asset associated with the secondary asset.

It is contemplated that in the method of FIG. 18, the asset management controller may also be configured to rank at least one primary asset or at least one secondary asset on a zone-wise basis.

In some embodiments, the asset management controller may determine a life cycle risk for the at least one secondary asset based on the process analytics parameter. In addition, the asset management controller may determine a communications and cyber security (CCS) risk for the at least one secondary asset based on the security analytics parameter. The asset management controller may then determine a ranking for the at least one secondary asset based on the life cycle risk and the CCS risk. The ranking of secondary assets may be indicative of a relative short-term, mid-term, or long-term health of the secondary assets. The ranking of secondary assets may also identify one or more high risk secondary assets or secondary assets in need of an action such as a maintenance action, an assessment of risk of failure, a change in operating conditions, a replacement, a disconnect, or a reduction in loading.

In some embodiments, the asset management controller may determine an asset risk for the at least one secondary asset based on the health analytics parameter. The asset management controller may also determine an asset loading risk for the at least one primary asset based on the performance analytics parameter. The asset management controller may then determine a ranking for the at least one primary asset based on the life cycle risk and the CCS risk. The ranking of primary assets may be indicative of a relative short-term, mid-term, or long-term health of the primary assets. The ranking may also identify one or more high risk primary assets or primary assets in need of an action such as a repair, a maintenance action, an assessment of risk of failure, a change in operating conditions, a replacement, a disconnect, or a reduction in loading.

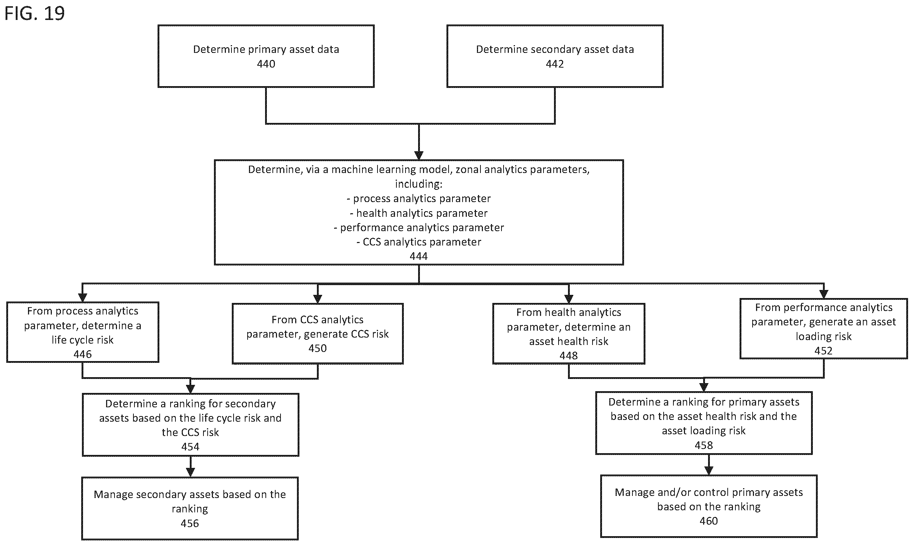

FIG. 19 is an exemplary method of operating a power grid system. The method may be performed, for example, by an asset management controller. In the method, the asset management controller measures, monitors, and consolidates primary asset data and secondary asset data. In some examples, the method or portions thereof may be performed the power grid system 100 or portions thereof, such as the asset management controller 145. The asset management controller may be associated with one or more of a plurality of zones. For example, the asset management controller may be associated with one or more of the transmission zones 102 and/or with one or more of the plurality of distribution zones 104.

At block 440, the method includes determining primary asset data for one or more primary assets. In some approaches, the asset management controller 145 may determine or receive the secondary asset data. The primary asset data may be determined via a power automation and control system (PACS) or via another measurement and control (M&C) system associated with the power grid system. In some examples, the primary asset data may be determined via one or more of the transmission zonal measurement devices 108 and/or via one or more of the distribution zonal measurement devices 116.

At block 442, the method includes determining secondary asset data for one or more secondary assets. In some approaches, the asset management controller 145 may determine or receive the secondary asset data. The secondary asset data may be determined via a power automation and control system (PACS) or via another measurement and control (M&C) system associated with the power grid system. In some examples, the secondary asset data may be determined via one or more of the transmission zonal measurement devices 108 and/or via one or more of the distribution zonal measurement devices 116.

At block 444, the method includes determining one or more zonal analytics parameters. The zonal analytics parameters may be determined based on the primary asset and/or the secondary asset data. The zonal analytics parameters may be determined or computed using one or more machine learning algorithms. In some approaches, the asset management controller 145 may determine or compute the zonal analytics parameters. The zonal analytics parameters may include one or more of a process analytics parameter, a health analytics parameter, a performance analytics parameter, or a CCS analytics parameter. Each of the zonal analytics parameters are discussed in further detail with reference to FIG. 18.

At block 446, the method includes determining a life cycle risk for one or more secondary asset from the process analytics parameters. In some approaches, the asset management controller 145 may determine the life cycle risk.

At block 450, the method includes determining a CCS risk for one or more secondary asset from the CCS analytics parameters. In some approaches, the asset management controller 145 may determine the CCS risk.

At block 454, the method includes determining a ranking for secondary assets based on the life cycle risk and the CCS risk for the secondary assets. As discussed above, the ranking for secondary assets may indicate relative short-term, mid-term, or long-term health of the secondary assets. The ranking of secondary assets may also identify one or more high risk secondary assets or secondary assets in need of an action such as a maintenance action, an assessment of risk of failure, a change in operating conditions, a replacement, a disconnect, or a reduction in loading. The ranking may provide a ranking of secondary assets in a fleet, for example, on a zone-wise basis. Accordingly, the ranking may be used to perform zonal fleet management.

At block 456, the method includes managing one or more secondary assets based on the ranking. The management of secondary assets may include actions that adjust the operation of one or more secondary assets. In some examples, the management of secondary assets may include a change in operating conditions or a reduction of loading on a secondary asset. For example, the management of secondary assets may include an input, such as a control command, to a transmission zonal controller 112 or a distribution zonal controller 120. The asset management controller 145 may communicate a command or other input to the transmission zonal controller 112 adjust operation of one or more devices such as a transmission zonal control device 110 in a transmission zone 102. The asset management controller 145 may also communicate a command or other input to the distribution zonal controller 120 adjust operation of one or more devices such as a distribution zonal control device 118 in a distribution zone 104. In yet other examples, management of secondary assets may include repair, replacement, or disconnect the secondary assets.

At block 448, the method includes determining an asset health risk for one or more primary assets from the health analytics parameters for the respective primary assets. In some approaches, the asset management controller 145 may determine the asset health risk.

At block 452, the method includes determining an asset loading risk for one or more primary assets from the performance analytics parameters for the respective primary assets. In some approaches, the asset management controller 145 may determine the asset loading risk.

At block 458, the method includes determining a ranking for primary assets based on the asset health risk and the asset loading risk for the primary assets. As discussed above, the ranking of primary assets may be indicative of a relative short-term, mid-term, or long-term health of the primary assets. The ranking may also identify one or more high risk primary assets or primary assets in need of an action such as a repair, a maintenance action, an assessment of risk of failure, a change in operating conditions, a replacement, a disconnect, or a reduction in loading. The ranking may provide a ranking of primary assets in a fleet, for example, on a zone-wise basis. Accordingly, the ranking may be used to perform zonal fleet management.

At block 460, the method includes managing one or more primary assets based on the ranking. The management of primary assets may include actions that adjust the operation of one or more primary assets. In some examples, the management of secondary assets may include a change in operating conditions or a reduction of loading on a primary asset. For example, the management of secondary assets may include an input, such as a control command, to a transmission zonal controller 112 or a distribution zonal controller 120. In some aspects, the asset management controller 145 may adjust provide an asset loading guideline input to a transmission zonal controller 112 or a distribution zonal controller 120 to adjust the loading level on the asset to avoid an immediate risk. The asset management controller 145 may communicate a command or other input to the transmission zonal controller 112 adjust operation of one or more devices such as a transmission zonal control device 110 in a transmission zone 102. The asset management controller 145 may also communicate a command or other input to the distribution zonal controller 120 adjust operation of one or more devices such as a distribution zonal control device 118 in a distribution zone 104. In yet other examples, management of primary assets may include repair, replacement, or disconnect the secondary assets.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Further aspects of the disclosure are provided by the subject matter of the following clauses:

A power grid system comprising: an advanced distribution management system (ADMS); and a distribution zonal measurement device configured to measure at least one zonal distribution operational parameter for an assigned distribution zone of a plurality of distribution zones in a power grid, each of the plurality of distribution zones having an associated distribution zonal measurement device; and a distribution zonal controller associated with the assigned distribution zone and in communication with the distribution zonal measurement device and the advanced distribution management system, each of the plurality of distribution zones having an associated zonal controller, the distribution zonal controller configured to: receive distribution zonal operational data for the assigned distribution zone from the distribution zonal measurement device; determine a distribution zonal orchestration index for the assigned distribution zone based on the distribution zonal operational data; communicate the distribution zonal orchestration index to the advanced distribution management system (ADMS); determine an adaptive control action for one or more distribution control devices in the assigned distribution zone based on the distribution zonal orchestration index; and communicate a command to the one or more distribution control devices based on the adaptive control action.

The power grid system of any preceding clause, wherein the ADMS is configured to dynamically classify the power grid into the plurality of distribution zones based on at least one of a power grid topology or a predefined logic.

The power grid system of any preceding clause, wherein each of the plurality of distribution zones includes one or more distribution system assets; and wherein the one or more distribution system assets include at least one of substation equipment, a distribution radial feeder line, or an outgoing line.

The power grid system of any preceding clause, wherein each of the plurality of distribution zones includes one or more interconnections with another one of the plurality of distribution zones.

The power grid system of any preceding clause, wherein each of the plurality of distribution zones transmits distribution operational data to the advanced distribution management system.

The power grid system of any preceding clause, wherein the distribution zonal operational data includes at least one of voltage, power factor, active/reactive power, load per node, battery based storage system (BESS) capacity, distributed energy resource (DER) generation, renewable energy resource (REN) energy source generation, frequency, electric vehicle (EV) load, micro grid generation, micro grid load, feeder voltage, feeder current, feeder load imbalance, or power quality data.

The power grid system of any preceding clause, wherein the command is configured to cause the one or more distribution control devices to perform the adaptive control action.

The power grid system of any preceding clause, wherein the command is configured to control at least one of an electric vehicle load or a passive load or an active load, and wherein the passive load is an industrial, commercial, or residential load that can be switched on or off and cannot be controlled for partial usage.

The power grid system of any preceding clause, wherein at least one of the plurality of distribution zones is further divided into a plurality of sub-zones based on one or more sub-zoning rules or policies defined in the advanced distribution management system.

The power grid system of any preceding clause, wherein the distribution zonal controller is further configured to: receive distribution operational data from at least one of the plurality of sub-zones.

The power grid system of any preceding clause, wherein at least one of the plurality of distribution zones is further divided into a plurality of load clusters based on one or more clustering rules or policies defined in the advanced distribution management system.

The power grid system of any preceding clause, wherein the assigned distribution zone includes a plurality of feeders, and wherein the one or more clustering rules instructs the distribution zonal controller to divide each feeder into a sub-zone and to divide each load connection point via a distribution transformer in the sub-zone into a cluster.

The power grid system of any preceding clause, wherein the distribution zonal orchestration index is a measure of operation of the assigned distribution zone with reference to a baseline operational data for the assigned distribution zone.

The power grid system of any preceding clause, wherein the baseline operational data includes one or more of a baseline load for the assigned distribution zone, a baseline setting for the one or more distribution control devices, a baseline distributed energy resource (DER) generation profile for the assigned distribution zone, or a baseline intermittency profile for the assigned distribution zone.

The power grid system of any preceding clause, wherein the distribution zonal controller is configured to determine the baseline operational data via a baseline machine learning model that is trained on at least one of historical load data for the assigned distribution zone, simulated load data for the assigned distribution zone, historical settings for the one or more distribution control devices, historical distributed energy resource (DER) generation profile data for the assigned distribution zone, simulated distributed energy resource (DER) generation profile data for the assigned distribution zone, simulated intermittency profile data for the assigned distribution zone, or historical intermittency profile data for the assigned distribution zone.

The power grid system of any preceding clause, wherein the distribution zonal controller is further configured to: identify distribution zonal operational violation based on the distribution zonal operational data and a distribution zonal policy, wherein distribution zonal policy includes adaptive control sources, how to map adaptive control sources to violations, predictive control sources, how to map predictive control sources to violations, information on at least one of how to operate the plurality of distribution zones, how to form sub-zones or clusters based on power grid topology, machine learning objectives for the plurality of distribution zones, computing indices related to operation of the plurality of distribution zones, or coordinating between the plurality of distribution zones.

The power grid system of any preceding clause, wherein the distribution zonal orchestration index is indicative of at least one of operational or non-operational violations in the assigned distribution zone.

The power grid system of any preceding clause, wherein the adaptive control action is determined based on an adaptive control machine learning model that is trained on at least one of historical distribution zonal operational parameters, simulated distribution zonal operational parameters, historical distribution control measures, simulated distribution control measures, simulated distribution zonal adaptive policies, or historical distribution zonal adaptive policies.

The power grid system of any preceding clause, wherein the distribution zonal controller is further configured to: receive distribution forecast data from at least one of the ADMS, a third-party engine, a server, a device, or a website; receive a distribution zonal predictive policy from the advanced distribution management system; and determine a predictive control action based on the distribution zonal operational data and the distribution zonal predictive policy.

The power grid system of any preceding clause, wherein the predictive control action is determined based on a predictive control machine learning model that is trained on at least one of historical distribution zonal operational parameters, simulated distribution zonal operational parameters, historical distribution control measures, simulated distribution control measures, simulated distribution forecast data, or historical distribution forecast data.

The power grid system of any preceding clause, wherein the distribution forecast data includes at least one of forecasted load data, forecasted weather data, or forecasted distributed energy resource (DER) data.

The power grid system of any preceding clause, wherein the distribution zonal controller is further configured to receive a distribution zonal predictive policy from the advanced distribution management system, and wherein the distribution zonal controller determines the predictive control action based on the distribution zonal predictive policy.

The power grid system of any preceding clause, wherein the distribution zonal controller includes a zonal configuration module configured to adjust one or more thresholds, limits, or set-points for one or more feeders, assets, or devices in the assigned distribution zone based on the distribution zonal operational data.

The power grid system of any preceding clause, wherein the distribution parameters include at least one of a distribution energy resource, a battery energy storage system, or a volt/VAR optimization parameter.

The power grid system of any preceding clause, wherein the distribution zonal controller includes a zonal monitoring module configured to receive operational data from at least one sub-zone or cluster within the assigned distribution zone.

The power grid system of any preceding clause, wherein the distribution zonal controller includes a zonal control module is configured to communicate the command to the one or more distribution control devices based on the adaptive control action or to change one or more set points of the one or more distribution control devices.

The power grid system of any preceding clause, wherein the distribution zonal controller includes a zonal feedback module configured to receive operational data after implementation of one or more adaptive control actions in the assigned distribution zone.

The power grid system of any preceding clause, wherein the distribution zonal controller includes a zonal low voltage (LV) module, the LV module being a cluster of the assigned sub-zone, the LV module configured to receive operational data from a low voltage circuit in the assigned distribution zone using advanced metering infrastructure (AMI) or meter data management system, wherein the operational data includes at least one of electric vehicle (EV) load, roof-top photovoltaic (PV) generation, power quality, total load, critical load, or load imbalance.

The power grid system of any preceding clause, wherein the distribution zonal controller includes a zonal machine learning module configured to determine the adaptive control action using a machine learning model that is trained on at least one of historical distribution zonal operational parameters, simulated distribution zonal operational parameters, simulated distribution adaptive control measures, or historical distribution adaptive control measures.

The power grid system of any preceding clause, wherein the distribution zonal controller is further configured to communicate the distribution zonal orchestration index to the advanced distribution management system (ADMS).

The power grid system of any preceding clause, wherein the advanced distribution management system (ADMS) is configured to communicate an intervention control command to the distribution zonal controller based on the distribution zonal orchestration index and a distribution zonal orchestration index from another one of the plurality of distribution zones, wherein the intervention control command addresses at least one of an operational or non-operational violation in the plurality of distribution zones.

The power grid system of any preceding clause, wherein the distribution zonal controller is further configured to: determine at least one of a load/generation growth index or a distributed energy resource (DER) intermittency level for the assigned distribution zone; and determine an a setting for one or more distribution control devices based on the load/generation growth index or the distributed energy resource (DER) intermittency level.

The power grid system of any preceding clause, wherein the load/generation growth index indicating an extent by which load/generation has increased in the assigned distribution zone; and wherein the DER intermittency level indicating a difference between actual DER generation and forecasted DER generation for a particular time interval.

The power grid system of any preceding clause, wherein the distribution zonal orchestration index is determined based on at least one of the load/generation growth index and the DER intermittency level.

The power grid system of any preceding clause, wherein the distribution zonal controller is further configured to: receive a fault restoration plan for a fault in the assigned distribution zone; and determine a setting for one or more distribution control devices based on the fault restoration plan.

The power grid system of any preceding clause, wherein the distribution zonal controller is further configured to: receive an outage restoration plan for the assigned distribution zone; and determine a setting for one or more distribution control devices based on the outage restoration plan.

The power grid system of any preceding clause, wherein the distribution zonal controller is further configured to: receive a load management plan for the assigned distribution zone; and determine a setting for one or more distribution control devices based on the load management plan.

The power grid system of any preceding clause, wherein the distribution zonal controller is further configured to: receive a new distributed energy resource (DER) commitment or registration for the assigned distribution zone; and determine a setting for one or more distribution control devices based on the new distributed energy resource (DER) commitment or registration.

The power grid system of any preceding clause, wherein the distribution zonal controller is further configured to: receive a voltage/VAR flow on a feeder and bus under steady state operation; determine a voltage/VAR flow on a feeder and bus after a planned reconfiguration; and determine a target voltage/VAR profile based on the voltage/VAR flow on a feeder and bus after the planned reconfiguration.

A method comprising, at each of a plurality of zonal controllers associated with a plurality of distribution zones: receiving zonal distribution operational data for an assigned distribution zone from a distribution zonal measurement device associated with the assigned distribution zone; determining a distribution zonal orchestration index for the assigned distribution zone based on the zonal distribution operational data; communicating the distribution zonal orchestration index to an advanced distribution management system (ADMS); determining an adaptive control action for one or more distribution control devices in the assigned distribution zone based on the distribution zonal orchestration index; and communicating a command to the one or more distribution control devices based on the adaptive control action.

The method of any preceding clause, wherein each of the plurality of distribution zones includes one or more distribution system assets.

The method of any preceding clause, wherein the one or more distribution system assets include at least one of substation equipment, a distribution radial feeder line, or an outgoing line.

The method of any preceding clause, wherein each of the plurality of distribution zones includes one or more interconnections with another one of the plurality of distribution zones.

The method of any preceding clause, wherein each of the plurality of distribution zones transmits distribution operational data to the advanced distribution management system.

The method of any preceding clause, wherein the zonal distribution operational data includes at least one of power data, quality factor data, or voltage data.

The method of any preceding clause, wherein the command is configured to cause the one or more distribution control devices to perform the adaptive control action.

The method of any preceding clause, wherein the command is configured to control at least one of an electric vehicle load or a passive load.

The method of any preceding clause, wherein at least one of the plurality of distribution zones is further divided into a plurality of sub-zones based on one or more sub-zoning rules or policies defined in the advanced distribution management system.

The method of any preceding clause, further comprising receiving distribution operational data from at least one of the plurality of sub-zones.

The method of any preceding clause, wherein at least one of the plurality of distribution zones is further divided into a plurality of load clusters based on one or more clustering rules or policies defined in the advanced distribution management system.

The method of any preceding clause, wherein the distribution zonal orchestration index is a measure of operation of the assigned distribution zone with reference to a baseline operational data for the assigned distribution zone.

The method of any preceding clause, wherein the baseline operational data includes one or more of a baseline load for the assigned distribution zone, a baseline setting for the one or more distribution control devices, a baseline distributed energy resource (DER) generation profile for the assigned distribution zone, or a baseline intermittency profile for the assigned distribution zone.

The method of any preceding clause, wherein the distribution zonal controller is configured to determine the baseline operational data via a baseline machine learning module that is trained on at least one of historical load data for the assigned distribution zone, historical settings for the one or more distribution control devices, historical distributed energy resource (DER) generation profile data for the assigned distribution zone, or historical intermittency profile data for the assigned distribution zone.

The method of any preceding clause, further comprising identifying a distribution zonal operational violation based on the zonal distribution operational data and a distribution zonal policy.

The method of any preceding clause, wherein the distribution zonal orchestration index is indicative of at least one of operational or non-operational violations in the assigned distribution zone.

The method of any preceding clause, wherein the adaptive control action is determined based on an adaptive control machine learning model that is trained on at least one of historical distribution zonal operational parameters, historical distribution control measures, or historical distribution zonal adaptive policies.

The method of any preceding clause, further comprising: receiving distribution forecast data; receiving a distribution zonal predictive policy from the advanced distribution management system; and determining a predictive control action based on the zonal distribution operational data and the distribution zonal predictive policy.

The method of any preceding clause, wherein the predictive control action is determined based on a predictive control machine learning model that is trained on at least one of historical distribution zonal operational parameters, historical distribution control measures, or historical distribution forecast data.

The method of any preceding clause, wherein the distribution forecast data includes at least one of forecasted load data, forecasted weather data, or forecasted distributed energy resource (DER) data.

The method of any preceding clause, further including receiving a distribution zonal predictive policy from the advanced distribution management system; and determining a predictive control action for the assigned distribution zone based on the zonal predictive policy.

The method of any preceding clause, further including adjusting one or more thresholds, limits, or set-points for distribution parameters in the assigned distribution zone.

The method of any preceding clause, wherein the distribution parameters include at least one of a distribution energy resource, a battery energy storage system, or a volt/VAR optimization parameter.

The method of any preceding clause, further comprising receiving operational data from at least one sub-zone or cluster within the assigned distribution zone.

The method of any preceding clause, further including: communicating the distribution zonal orchestration index to the advanced distribution management system (ADMS).

The method of any preceding clause, further including: receiving a backup control from the advanced distribution management system (ADMS) based on the distribution zonal orchestration index and a distribution zonal orchestration index from another one of the plurality of distribution zones.

The method of any preceding clause, further including: determining at least one of a load/generation growth index or a distributed energy resource (DER) intermittency level for the assigned distribution zone; and determining a setting for one or more distribution control devices based on the load/generation growth index or the distributed energy resource (DER) intermittency level.

The method of any preceding clause, further including: determining a fault restoration plan for a fault in the assigned distribution zone; and determining a setting for one or more distribution control devices based on the fault restoration plan.

The method of any preceding clause, further including: determining an outage restoration plan for the assigned distribution zone; and determining a setting for one or more distribution control devices based on the outage restoration plan.

The method of any preceding clause, further including: determining a load management plan for the assigned distribution zone; and determining a setting for one or more distribution control devices based on the load management plan.

The method of any preceding clause, further including: determining a new distributed energy resource (DER) commitment or registration for the assigned distribution zone; and determine a setting for one or more distribution control devices based on the new distributed energy resource (DER) commitment or registration.

The method of any preceding clause, further including: determining a voltage/VAR flow on a feeder and bus under steady state operation; determining a voltage/VAR flow on a feeder and bus after a planned reconfiguration; and determining a target voltage/VAR profile based on the voltage/VAR flow on a feeder and bus after the planned reconfiguration.

## Claims

1. A power grid system comprising:
an advanced distribution management system (ADMS); and
a distribution zonal measurement device configured to measure at least one zonal distribution operational parameter for an assigned distribution zone of a plurality of distribution zones in a power grid, each of the plurality of distribution zones having an associated distribution zonal measurement device; and
a distribution zonal controller associated with the assigned distribution zone and in communication with the distribution zonal measurement device and the advanced distribution management system, each of the plurality of distribution zones having an associated zonal controller, the distribution zonal controller configured to:
receive distribution zonal operational data for the assigned distribution zone from the distribution zonal measurement device;
determine a distribution zonal orchestration index for the assigned distribution zone based on the distribution zonal operational data;
communicate the distribution zonal orchestration index to the advanced distribution management system (ADMS);
determine an adaptive control action for one or more distribution control devices in the assigned distribution zone based on the distribution zonal orchestration index; and
communicate a command to the one or more distribution control devices based on the adaptive control action.

2. The power grid system of claim 1, wherein the ADMS is configured to dynamically classify the power grid into the plurality of distribution zones based on at least one of a power grid topology or a predefined logic.

3. The power grid system of any preceding claim, wherein each of the plurality of distribution zones includes one or more distribution system assets; and wherein the one or more distribution system assets include at least one of substation equipment, a distribution radial feeder line, or an outgoing line; and/or wherein each of the plurality of distribution zones includes one or more interconnections with another one of the plurality of distribution zones.

4. The power grid system of any preceding claim, wherein each of the plurality of distribution zones transmits distribution operational data to the advanced distribution management system.

5. The power grid system of any preceding claim, wherein the distribution zonal operational data includes at least one of voltage, power factor, active/reactive power, load per node, battery based storage system (BESS) capacity, distributed energy resource (DER) generation, renewable energy resource (REN) energy source generation, frequency, electric vehicle (EV) load, micro grid generation, micro grid load, feeder voltage, feeder current, feeder load imbalance, or power quality data.

6. The power grid system of any preceding claim, wherein the command is configured to cause the one or more distribution control devices to perform the adaptive control action.

7. The power grid system of any preceding claim, wherein the command is configured to control at least one of an electric vehicle load or a passive load or an active load, and wherein the passive load is an industrial, commercial, or residential load that can be switched on or off and cannot be controlled for partial usage.

8. The power grid system of any preceding claim, wherein at least one of the plurality of distribution zones is further divided into a plurality of sub-zones based on one or more sub-zoning rules or policies defined in the advanced distribution management system.

9. The power grid system of claim 8, wherein the distribution zonal controller is further configured to:
receive distribution operational data from at least one of the plurality of sub-zones.

10. The power grid system of claim 8, wherein at least one of the plurality of distribution zones is further divided into a plurality of load clusters based on one or more clustering rules or policies defined in the advanced distribution management system; optionally wherein the assigned distribution zone includes a plurality of feeders, and wherein the one or more clustering rules instructs the distribution zonal controller to divide each feeder into a sub-zone and to divide each load connection point via a distribution transformer in the sub-zone into a cluster.

11. The power grid system of any preceding claim, wherein the distribution zonal orchestration index is a measure of operation of the assigned distribution zone with reference to a baseline operational data for the assigned distribution zone; optionally wherein the baseline operational data includes one or more of a baseline load for the assigned distribution zone, a baseline setting for the one or more distribution control devices, a baseline distributed energy resource (DER) generation profile for the assigned distribution zone, or a baseline intermittency profile for the assigned distribution zone; and/or wherein the distribution zonal controller is configured to determine the baseline operational data via a baseline machine learning model that is trained on at least one of historical load data for the assigned distribution zone, simulated load data for the assigned distribution zone, historical settings for the one or more distribution control devices, historical distributed energy resource (DER) generation profile data for the assigned distribution zone, simulated distributed energy resource (DER) generation profile data for the assigned distribution zone, simulated intermittency profile data for the assigned distribution zone, or historical intermittency profile data for the assigned distribution zone.

12. The power grid system of any preceding claim, wherein the distribution zonal controller is further configured to:
identify distribution zonal operational violation based on the distribution zonal operational data and a distribution zonal policy, wherein distribution zonal policy includes adaptive control sources, how to map adaptive control sources to violations, predictive control sources, how to map predictive control sources to violations, information on at least one of how to operate the plurality of distribution zones, how to form sub-zones or clusters based on power grid topology, machine learning objectives for the plurality of distribution zones, computing indices related to operation of the plurality of distribution zones, or coordinating between the plurality of distribution zones.

13. The power grid system of any preceding claim, wherein the distribution zonal orchestration index is indicative of at least one of operational or non-operational violations in the assigned distribution zone.

14. The power grid system of any preceding claim, wherein the adaptive control action is determined based on an adaptive control machine learning model that is trained on at least one of historical distribution zonal operational parameters, simulated distribution zonal operational parameters, historical distribution control measures, simulated distribution control measures, simulated distribution zonal adaptive policies, or historical distribution zonal adaptive policies.

15. The power grid system of any preceding claim, wherein the distribution zonal controller is further configured to:
receive distribution forecast data from at least one of the ADMS, a third-party engine, a server, a device, or a website;
receive a distribution zonal predictive policy from the advanced distribution management system; and
determine a predictive control action based on the distribution zonal operational data and the distribution zonal predictive policy; optionally wherein the predictive control action is determined based on a predictive control machine learning model that is trained on at least one of historical distribution zonal operational parameters, simulated distribution zonal operational parameters, historical distribution control measures, simulated distribution control measures, simulated distribution forecast data, or historical distribution forecast data.
